# EUROPÄISCHE PATENTSCHRIFT

(11) **EP 3 472 112 B1**
(45) Veröffentlichungstag und Bekanntmachung des Hinweises auf die Patenterteilung: **15.04.2026**
(21) Anmeldenummer: 17731901.9
(22) Anmeldetag: 21.06.2017
(51) Int. Cl.: C03C 3/093, C03C 3/064, C03C 3/087, C03C 10/00, C03B 19/06, C03C 27/00, C03C 27/02, C04B 37/04

(54) **MIT EINEM ZUMINDEST TEILWEISE KRISTALLISIERTEN GLAS HERGESTELLTE VERBINDUNG UND EIN VERFAHREN ZUR HERSTELLUNG EINER SOLCHEN VERBINDUNG**
BOND PRODUCED WITH AN AT LEAST PARTIALLY CRYSTALLIZED GLASS AND METHOD FOR PRODUCING SUCH A BOND
LIAISON RÉALISÉE AU MOYEN D'UN VERRE AU MOINS PARTIELLEMENT CRISTALLISÉ ET PROCÉDÉ POUR RÉALISER UNE TELLE LIAISON

(30) Priorität: 21.06.2016 DE 102016111390
(43) Veröffentlichungstag der Anmeldung: 24.04.2019
(73) Patentinhaber: SCHOTT AG, 55122 Mainz (DE)
(72) Erfinder: MIX, Christian, 55122 Mainz (DE); MITRA, Ina, 55271 Stadecken-Elsheim (DE); DAHLMANN, Ulf, 84034 Landshut (DE); SUFFNER, Jens, 84034 Landshut (DE); HOVHANNISYAN, Martun, 60598 Frankfurt am Main (DE); RAMDOHR, Björn, 84032 Landshut (DE)
(74) Vertreter: Blumbach · Zinngrebe Patentanwälte PartG mbB
(86) Internationale Anmeldenummer: PCT/EP2017/065321
(87) Internationale Veröffentlichungsnummer: WO 2017/220700

(56) Entgegenhaltungen:
- EP-A1- 2 816 018
- EP-A2- 2 522 639
- DE-B3- 102012 206 266
- US-A- 3 825 468
- US-A1- 2015 083 487
- OANA BRETCANU ET AL: "Simple methods to fabricate Bioglass(R)-derived glass-ceramic scaffolds exhibiting porosity gradient", JOURNAL OF MATERIALS SCIENCE, KLUWER ACADEMIC PUBLISHERS, BO, vol. 43, no. 12, 3 April 2008 (2008-04-03), pages 4127 - 4134, XP019607440, ISSN: 1573-4803
- DONALD I W: "PREPARATION, PROPERTIES AND CHEMISTRY OF GLASS- AND GLASS-CERAMIC- TO-METAL SEALS AND COATINGS", JOURNAL OF MATERIALS SCIENCE, KLUWER ACADEMIC PUBLISHERS, DORDRECHT, vol. 28, no. 11, 1 June 1993 (1993-06-01), pages 2841 - 2886, XP000891415, ISSN: 0022-2461, DOI: 10.1007/BF00354689
- I. W. DONALD ET AL: "Recent developments in the preparation, characterization and applications of glass- and glass-ceramic-to-metal seals and coatings", JOURNAL OF MATERIALS SCIENCE, vol. 46, no. 7, 1 April 2011 (2011-04-01), pages 1975 - 2000, XP055063347, ISSN: 0022-2461, DOI: 10.1007/s10853-010-5095-y

## Beschreibung

Die Erfindung betrifft eine mit einem zumindest teilweise kristallisierten Glas hergestellte Verbindung, beispielsweise eine Metall-Glas-Verbindung, insbesondere eine Metall-Glasverbindung bei einem Durchführungs- oder Verbindungselement sowie ein Verfahren zur Herstellung einer solchen Verbindung, insbesondere bei einem Durchführungs- oder Verbindungselement.

### Stand der Technik

Zur Herstellung von Durchführungen für elektrische Leiter ist es bekannt, innerhalb metallischer Trägerstrukturen beispielsweise keramisches Material anzuordnen, mittels welchem Leiter gehalten sind.

DE 100 16 416 A1 offenbart eine Zündkerze sowie ein Verfahren zu deren Herstellung, bei welcher ein Mittelbolzen von einem Isolator und einem glaskeramischen Abbrandwiderstand umgeben ist. Der glaskeramische Abbrandwiderstand ist in Form einer Widerstandseinschmelzung ist mit benachbarten metallischen Bauteilen der Zündkerze über ein Glaskeramiklot verbunden.

US 5,820,989 beschreibt eine glaskeramische Zusammensetzung für hermetische Verbindungen mit Metallen, welche beispielsweise für Gassensoren Anwendung findet. Die verwendeten glaskeramischen Materialien weisen einen SiO₂-Gehalt von mehr als 65 Gew.-% auf sowie weiterhin Alkalien, welche regelmäßig zu einem hohen glasigen Anteil des glaskeramischen Materials führen, sowie nur zu einer bedingten Verwendbarkeit als Isolationsmaterial bei hohen Temperaturen.

US 2014/0360729 beschreibt eine Durchführung eines unterseeischen Geräts, bei welchem mit einem Glas oder glaskeramischen Material eine elektrische Zuführung zu einer motorischen Einrichtung dicht und widerstandsfähig gegenüber Umwelteinflüssen gehalten ist.

DE 10 2014 218 983 A1 beschreibt ein Durchführungselement für harte Betriebsbedingungen, welches ein elektrisch isolierendes Befestigungsmaterial umfasst, welches ein kristallisierbares Glas sein kann. Glas, so wird in dieser Anmeldung ausgeführt, ist in bekannter Weise ein amorphes Material, in dem Kristallite unerwünscht sind. In dieser Anmeldung wird jedoch auch explizit ausgesagt, dass ein amorphes Glasmaterial genauso gut geeignet sei wie ein Glaskeramikmaterial und werden Einsatztemperaturbereiche von 260 °C sowie 350 °C angegeben. Poren oder Porositäten des kristallisierbaren Glases sind in diesem Dokument nicht offenbart.

DE 10 2012 206 266 B3 beschreibt ein Barium- und strontiumfreies glasiges oder glaskeramisches Fügematerial und dessen Verwendung. Weder Poren noch strukturiert angeordnete Poren sind als in diesem Material vorhanden erwähnt.

US 3 825 468 B zeigt eine Sinterglaskeramik, welche nach dem Sintervorgang verbliebene Poren aufweisen kann, sowie ein Verfahren zu deren Herstellung. Diese Sinterglaskeramik weist Kristalle mit verschiedenem Schmelzpunkt auf und es werden bei der Sinterung Temperaturen verwendet, bei welchen die Kristalle nahe der Oberfläche teilweise aufschmelzen, wodurch eine geschlossene Porigkeit erzielt werden soll. Bei dieser Temperaturbehandlung soll jedoch die grundlegende kristalline Struktur des Sinterkeramikkörpers erhalten bleiben. Hierdurch kommt es zu einem teilweise geschmolzenen Sinterkörper mit Poren, welche aus dem Sintervorgang selbst stammen. Hierbei liegt jedoch ein für Sinterkörper typisches Anschmelzen der glasigen Phase von kristallinen Korngrenzen vor, welche im Sinterverbund nicht die mechanische Stabilität einer vollständig verschmolzenen glasigen Phase aufweisen. Ferner wird zur Entstehung der keramischen Phasen zunächst in einem zweistufigen thermischen Verfahren eine Keimbildungstempratur verwendet, welche Kristallisationskeime entstehen lässt, und nachfolgend bei einer erhöhten Temperatur das Kristallwachstum basierend auf diesen Kristallisationskeimen veranlasst.

DE 10 2006 027 307 A1 offenbart eine Sinterkeramik sowie ein Verfahren zu deren Herstellung. Poren oder Porositäten werden für diese Sinterglaskeramik nicht offenbart.

Der wissenschaftliche Aufsatz "Simple methods to fabricate Bioglass®-derived glass-ceramic scaffolds exhiting porosity gradient", Journal of Materials Science, Vol. 43, Nr. 12 (2008), Seiten 4127-4134, beschreibt keine teilweise kristallisierten oder kristallisierbaren Gläser, sondern nichtkristallisierte Gläser, darüber hinaus auch mit einer offenporigen Struktur.

EP 2 816 018 A1 beschreibt ein glasiges oder teilkristallines Fügematerial für Brennstoffzellen und Sensoren, trifft aber keine Aussagen zu Porositäten oder Poren.

Der wissenschaftliche Aufsatz "Preparation, proteries and chemistry of glass- and glass-ceramic-to-metal seals and coatings", Journal of Materials Science, Bd. 28, Nr. 11, (1993-06-01), 2841 - 2886, beschreibt Gläser und Glaskeramiken zur Herstellung von Verbindungen, wobei die vorteilhafte Porenfreiheit der Glaskeramiken betont wird.

Der wissenschaftliche Aufsatz "Recent developments in the preparation, characterization and applications of glass- and glass-ceramic-to-metal seals and coatings", Journal of Materials Science, Bd. 46, Nr. 7, (2011-04-01), 1975-2000, betrifft ebenfalls Gläser und Glaskeramiken zur Herstellung von Verbindungen und beschreibt, dass eine verminderte Porosität zu einer besseren Benetzbarkeit führt, und beschreibt das Vorhandensein von Poren allgemein als wenig vorteilhaft.

DE 10 2012 206 266 B3 beschreibt ein barium- und strontiumfreies glasiges oder glaskeramisches Fügematerial und dessen Verwendung, wobei ausgeführt ist, dass Poren Ausgangspunkte für Schadstellen sein können.

Für viele Einsatzzwecke, beispielsweise in rauer oder druck- sowie temperaturbelasteter Umgebung, ist die mechanische Festigkeit von großer Bedeutung, beispielsweise um ein Bersten des Fügematerials möglichst sicher auszuschließen. Ferner gibt es Anwendungen, bei welchen die Temperaturbeständigkeit einer Verbindung, insbesondere einer keramischen oder einer Metall-Glasverbindung von wesentlicher Bedeutung ist. Je nach Einsatzzweck können hierbei Temperaturen auftreten, welche eine Temperaturbeständigkeit von mehr als 1000 °C und in vielen Fällen sogar bis zu 1200 °C oder höher erfordern.

### Aufgabe der Erfindung

Es ist eine Aufgabe der Erfindung, die mechanischen und vorzugsweise auch die thermischen Eigenschaften von kristallisierbaren bzw. kristallisierten Gläsern, Verbindungen von solchen Gläsern mit Einhausungsmaterial, beispielsweise in Form von Metall-Glas-Verbindungen, sowie Durchführungen, beispielsweise solche mit Metall-Glas-Verbindungen, zu verbessern.

Die Aufgabe wird auf höchst überraschende Weise durch den Gegenstand der unabhängigen Ansprüche gelöst. Weitere bevorzugte Ausgestaltungen werden auch in den unabhängigen Ansprüchen definiert.

Die Erfinder haben in höchst überraschender Weise festgestellt, dass in teilkristallisierten Gläsern durch das Auftreten von Poren Verbesserungen von deren mechanischen Eigenschaften, wie beispielsweise von deren Bruch- und Biegefestigkeit erzielt werden können.

So definiert beispielsweise Anspruch 1 eine Verbindung eines zumindest teilweise kristallisierten Glases mit zumindest einem Fügepartner mit einer Grenzfläche zwischen dem zumindest teilweise kristallisierten Glas und dem zumindest einen Fügepartner, wobei das zumindest teilweise kristallisierbare Glas eine Porosität aufweist, die zur Grenzfläche des zumindest teilweise kristallisierten Glases mit dem Fügepartner hin abnimmt und das zumindest teilweise kristallisierte Glas zumindest eine Kristallphase sowie Poren umfasst, welche in dem zumindest teilweise kristallisierten Glas strukturiert verteilt angeordnet sind, wobei die Porosität einen Gradienten aufweist und die Porosität in einem Abstand von weniger als 10 µm zur Grenzfläche des zumindest teilweise kristallisierten Glases weniger als 10 % beträgt, und Anspruch 9 betrifft ein zumindest teilweise kristallisiertes Glas für eine Verbindung eines zumindest teilweise kristallisierten Glases mit zumindest einem Fügepartner mit einer Grenzfläche zwischen dem zumindest teilweise kristallisierten Glas und dem zumindest einen Fügepartner nach Ausführungsformen sowie für ein Durchführungs- oder Verbindungselement nach Ausführungsformen.

Die nachfolgende Beschreibung des zumindest teilweise kristallisierten Glases gilt sowohl für das zumindest teilweise kristallisierte Glas eigenständig in dessen Eigenschaften als auch für das zumindest teilweise kristallisierte Glas als Teil einer Verbindung mit einem Fügepartner oder als Teil eines Durchführungs- oder Verbindungselements, denn die Eigenschaften des zumindest teilweise kristallisierten Glases erweisen sich, insbesondere als Teil der Verbindung oder eines Verbindungs- oder Durchführungselements, als besonders vorteilhaft.

Die Poren sind in dem zumindest teilweise kristallisierten Glas strukturiert verteilt angeordnet. Wenn dabei vorzugsweise die Poren des zumindest teilweise kristallisierten Glases nicht bereits im Sinterkörper vollständig angelegt oder vorhanden sind, sondern vielmehr zum Großteil gleichzeitig mit oder während der Kristallisation entstehen, wie es bei den bevorzugten Ausführungsformen der Erfindung der Fall ist, kann ein vollständiges oder nahezu vollständiges Verschmelzen der glasigen Phase vorliegen, welches zu einer homogeneren und festeren Ausgestaltung des Verbundes aus glasiger Phase und insbesondere später kristallisierenden und nachfolgend kristallisierten Anteilen führt, welche insbesondere Sinterglaskeramiken an Festigkeit, insbesondere Druckfestigkeit überlegen sind. Der Ausdruck, "im Sinterling angelegte oder vorhandene Poren", oder auch der Ausdruck "in einem Sinterkörper angelegte oder vorhandene Poren", bezeichnet im Rahmen dieser Offenbarung jeweils die beim Sintern gebildeten Poren, welche insbesondere durch den mechanischen Vorgang des Pressens des Sinterlings oder Sinterkörpers, jedoch nicht durch eine Kristallisation entstanden sind. Bei dem vorliegend offenbarten Verfahren kommt es zu einer homogeneren Verteilung der Poren und diese homogenere Verteilung führt zu einer nochmals verbesserten mechanischen Beständigkeit sowie zu einer nochmals erhöhten Thermoschockbeständigkeit.

Vorteilhaft ist es bei den bevorzugten zumindest teilweise kristallisierbaren Gläsern auch, dass diese nicht einem zweistufigen thermischen Verfahren, umfassend eine Keimbildungsphase und bei erhöhter Temperatur eine Phase des Kristallwachstums, unterzogen werden müssen, da diese bereits in einem einstufigen thermischen Verfahren, als sogenannte selbstkristallisierende Gläser bereits in glaskeramisches oder keramisches Material überführt werden können. Hierbei kann vorteilhaft beispielsweise eine konstante Temperaturerhöhung mit einer definierten, insbesondere nahezu konstanten Aufheizrate erfolgen. Derartige Temperatur-Zeit-Profile bieten auch prozesstechnische Vorteile, da diese einfacher zu beherrschen sind und mit größeren thermischen Toleranzen eingesetzt werden können.

Im Unterschied zu Kristallisation durch hinzugegebene Kristallisationskeime, wie Fremdpulver, oder Volumenkristallisation, keimt die Kristallisation bei diesen selbstkristallisierenden Gläsern auf der Oberfläche des Pulvers des teilweise kristallisierbaren Glases. Dies geschieht bei den erfindungsgemäßen selbstkristallisierenden Gläsern bei den genannten Heizraten ohne weitere Haltezeit. Dadurch wird eine effektive Fertigung ermöglicht. Diese Keimung geschieht zeitlich versetzt und bei niedrigeren Temperaturen als der tatsächliche Kristallisationsprozess.

Das für eine hermetische Einglasung erforderliche Benetzen des Fügepartners geschieht nach der Keimung, jedoch vor
dem eigentlichen Kristallisationsprozess. Dadurch kann eine hermetische, hochtemperaturstabile Einglasung erzielt werden.

Zunächst erscheint es als wenig naheliegend, dass eine Schwächung (hier durch vermindertes Material in den Poren) einer glaskeramischen Verbindung dennoch sehr gute mechanische Festigkeitswerte erhalten werden. Dies ist weiterhin umso überraschender, als im Stand der Technik auf besonders blasenfreie Verbindungsmaterialien abgestellt wird, um hohe mechanische und thermische Stabilität zu erzielen.

Die Erfinder haben herausgefunden, dass die erfindungsgemäße Porosität maßgeblich zur mechanischen Thermoschockbeständigkeit beiträgt. Dabei besteht ein Gradient in der Porendichte in Richtung der Grenzfläche zum eingeglasten Material, der eine defektfreie und blasenfreie Benetzung gewährleistet. Die Kombination aus der Porositätsverteilung und homogenen Kristallisation führt zu einer sehr hohen mechanischen Beständigkeit bei Temperaturen bis zu 900 °C, bei bestimmten bevorzugten Ausführungsformen, insbesondere bei der zweiten bevorzugten Ausführungsform, sogar bis zu Temperaturen von 1200 °C oder sogar mehr als 1200 °C, insbesondere bis zu einer Temperatur von 1270 °C.

Die Porosität tritt im zumindest teilweise kristallisierten Glas strukturiert verteilt auf, vorzugsweise in Form einer gesteuerten Porosität. Eine gesteuerte Porosität ist dabei dadurch gekennzeichnet, dass die Porosität, insbesondere die Poren, nicht überall im Volumen des betreffenden Formkörpers, welcher ein geformter Sinterkörper oder geformter Sinterling ist, in gleicher Form ausgebildet vorliegen. Insbesondere ist eine gesteuerte Porosität im Sinne der vorliegenden Erfindung dann gegeben, wenn in einem Grenzbereich des Formkörpers die Porosität einen sehr geringen Wert von beispielsweise höchstens 3% annimmt. Insbesondere weist die Oberfläche des zumindest teilweise kristallisierten Glases mit einer gesteuerten Porosität im Wesentlichen keine offenen Poren auf, also Poren, welche sich hin zum die Grenzfläche umgebenden Medium, beispielsweise Luft, öffnen, welches die hohe Hermetizität oder Fluiddichtigkeit nochmals unterstützt.

Im Gegensatz dazu weisen Gläser, beispielsweise auch kristallisierte Gläser, ohne gesteuerte Porosität die Poren nicht strukturiert verteilt auf, sondern sind auch durch Poren an der Grenzfläche, insbesondere offene Poren, gekennzeichnet. Dies liegt daran, dass bei hohen Einglasungstemperaturen in der Regel das Glas eine sehr niedrige Viskosität aufweist, sodass im Sinterkörper, der auch als Sinterling bezeichnet wird, angelegte oder vorhandene Poren an die Grenzfläche des Sinterkörpers migrieren können, wo sie sich dann öffnen.

Im Gegensatz dazu ist bei der gesteuerten Porosität im Sinne der vorliegenden Erfindung gerade der Grenzbereich durch eine sehr geringe Porosität gekennzeichnet. Vielmehr liegt ein Gradient, innerhalb dessen die Porosität von einem sehr geringen Wert von beispielsweise höchstens 3% auf einen Maximalwert, der beispielsweise 20%, aber auch mehr betragen kann, beispielsweise bis zu 50% oder mehr, vor. Dabei ist bei der gesteuerten Porosität dieser Gradient ebenfalls einstellbar, ebenso wie auch die Dicke des Grenzbereich, welcher sich durch eine sehr geringe Porosität auszeichnet. Dabei ist die Dicke des Bereichs mit geringer Porosität bei erhöhter Temperatur der Temperaturbehandlung größer ausgebildet als bei einer niedrigeren Temperatur, wodurch sich dieser gezielt beeinflussen oder einstellen lässt. Allerdings weist der Gradient, innerhalb dessen die Porosität von einem geringen Wert auf einen Maximalwert ansteigt, bei erhöhter Temperatur eine geringere Ausdehnung auf als bei niedrigerer Temperatur, wodurch sich auch dieser gezielt beeinflussen oder einstellen lässt.

Eine gesteuerte Porosität und ein Gradient der Porosität ist insbesondere dann erreichbar, wenn die tatsächliche Dichte des Sinterkörpers oder Sinterlings höchstens um 10 % geringer, vorteilhaft höchstens um 5% geringer, als die theoretische Dichte des Glases oder des zumindest teilweise kristallisierenden (aber noch nicht kristallisierten) Glases ist. Der Sintergrad beträgt in diesem Fall mindestens 90%, bevorzugt mindestens 95%. Hierbei sind die durch den Sinterling oder Sinterkörper eingetragenen Poren in der Regel von geringer Anzahl und können häufig auch aus dem kristallisierbaren oder zumindest teilweise kristallisierten Glas austreten, sodass durch die bei der Kristallisation entstehenden Poren eine strukturierte Anordnung dieser Poren entsteht. Das Verhältnis der bereits im Sinterkörper, Sinterling oder Formkörper angelegten oder vorhandenen Poren relativ zu den erfindungsgemäß entstandenen Poren beträgt beispielsweise bei einem Sintergrad von etwa 99% bei den hier beschriebenen bevorzugten Ausführungsformen beträgt etwa mindestens 1,8 oder kann auch höher liegen. Dies bedeutet, dass etwa für jede im Sinterkörper verbliebene Pore zumindest 1,8 Poren entstehen, welche dann zusätzlich im zumindest teilweise kristallisierten Glas vorhanden sind. Dieser Wert ist eine äußerst vorsichtige Angabe der Erfinder, da hierbei vernachlässigt wurde, dass bereits im Sinterkörper, Sinterling oder Formkörper vorhandenen Poren auch während der thermischen Behandlung noch entweichen können. Dabei kommt hinzu, dass sich diese während oder gleichzeitig mit der Kristallisation entstandenen Poren noch stark ausdehnen und somit den sich daraus ergebenden Wert der Porosität nochmals deutlich stärker erhöhen, als es diesem Verhältniswert entspricht.

Dieses Verhältnis ist durch die maximale Sintertemperatur und die Mahlung, insbesondere auch durch den Mahlgrad des gemahlenen Glases, insbesondere Grünglases, in einem weiten Bereich einstellbar und kann beispielsweise in einem Bereich von mindestens 1,5 bis etwa 5 liegen.

Überraschend hat sich nun gezeigt, dass sich Poren des zumindest teilweise kristallisierten Glases nicht bereits im Sinterling oder Sinterkörper, aus welchem das zumindest teilweise kristallisierte Glas hervorgegangen ist, vollständig angelegt oder bereits vorhanden sind, sondern vielmehr zum Großteil während oder gleichzeitig mit der Kristallisation entstehen oder sich vergrößern und ein volumenbezogener Anstieg der Porosität entsteht.

Bei einer bevorzugten Ausführungsform beträgt der Kristallanteil des zumindest teilweise kristallisierten Glases mehr als 50 Vol.%, bevorzugt mehr als 60 Vol.%. Dieser hohe Kristallphasenanteil trägt zusätzlich zur Erhöhung der Viskosität bei und führt somit zu einer erhöhten mechanischen Stabilität bei hohen Temperaturen. Weiterhin führt die hohe Kristallisation und damit teilweise auftretende Verzahnung der Kristallite zu einer Lokalisierung der Poren und ermöglicht somit die gesteuerte Porosität maßgeblich.

Somit umfasst ein erfindungsgemäßes zumindest teilweise kristallisiertes Glas zumindest eine Kristallphase sowie Poren, welche in dem zumindest teilweise kristallisierten Glas strukturiert verteilt angeordnet sind, wobei vorzugsweise die Poren des zumindest teilweise kristallisierten Glases nicht bereits im Sinterkörper, aus welchem das zumindest teilweise kristallisierte Glas hervorgegangen ist, vollständig angelegt oder bereits vorhanden sind, sondern insbesondere vielmehr zum Großteil gleichzeitig oder während der Kristallisation entstanden sind.

Als Sinterkörper oder Sinterling ist ein formstabiler Sinterkörper mit dem kristallisierbaren Glas bezeichnet, welcher nachfolgend dafür geeignet und bestimmt ist, mit einem Körper, der ein Einhausungsmaterial oder auch ein Dichtelement sein kann, eine Verbindung einzugehen.

### Detaillierte Beschreibung der Erfindung

Zum besseren Verständnis werden bei der nachfolgend detaillierten Beschreibung der Erfindung auch Definitionen von einigen der hier verwendeten Begriffe angegeben.

Im Sinne der Erfindung wird als Verbindung zwischen einem Glas, beispielsweise einem teilweise kristallisierten Glas, und einem Einhausungsmaterial, beispielsweise einem Metall, oder einer vorzugweise hochtemperaturstabilen Keramik, eine mechanische Verbindung verstanden, durch welche das jeweilige Einhausungsmaterial und das jeweilige Glas zumindest mechanisch, vorzugsweise fluiddicht aneinandergehalten sind. Zur Aufrechterhaltung dieser Verbindung können auch Kräfte, wie beispielsweise durch Druckspannungen hervorgerufen, vorhanden sein. Durch den Begriff der Verbindung soll keine chemische Verbindung definiert werden, obwohl diese im Kontaktbereich des Einhausungsmaterials mit dem Glas durch diesen Begriff nicht ausgeschlossen wird.

Eine spezielle Ausführungsform der hier betrachteten Verbindung ist die Glas-Metall-Verbindung. Diese Glas-Metall-Verbindung entstehen erfindungsgemäß allgemein mit dem zumindest teilweise kristallisierbaren Glas und einem Körper, der bevorzugt ein Einhausungsmaterial oder ein Dichtelement sein kann.

Als fluiddicht werden solche Verbindungen, beispielsweise Metall-Glas-Verbindungen, bezeichnet, wenn diese Verbindung abdichtet, also hier in diesem Fall gegen den Austritt oder Durchtritt von fluiden Medien dicht ist und bevorzugt im Wesentlichen vollständig (hermetisch) dicht ist. Die Dichtigkeit kann dabei durch einen Lecktest, üblicherweise mittels eines Helium-Lecktesters, bestimmt werden. Helium-Leckraten unter 1,0*10⁻⁸cm³/s (Kubikzentimeter pro Sekunde) bei Raumtemperatur oder 1,69*10⁻¹⁰ mbar*l/s bei Raumtemperatur zeigen an, dass eine im Wesentlichen vollständig hermetische Dichtung vorliegt.

Als Pore wird ein geschlossenes Volumenelement angesehen, welches vollständig von zumindest teilweise kristallsierbarem Glas und/oder von zumindest teilweise kristallisiertem Glas umgeben ist und in welchem selbst kein zumindest teilweise kristallsierbares oder zumindest teilweise kristallisiertes Glas angeordnet ist.

Durch die Kristallisation entsteht aus dem zumindest teilweise kristallisierbaren Glas ein zumindest teilweise kristallisiertes Glas, wobei dieses zumindest teilweise kristallisierte Glas eine glasige Phase und zumindest eine aus dem kristallisierbaren Glas hervorgegangene Kristallphase umfasst. Die glasige Phase wird auch als Restglasphase bezeichnet, welche kristallisierbar oder auch nicht kristallisierbar ausgestaltet vorliegen kann.

In diesem Sinne kann eine Pore, welche im zumindest teilweise kristallisierten Glas vorliegt, auch zumindest teilweise von einer Restglasphase und zumindest teilweise von einer Kristallphase umgeben sein, wobei in der Pore selbst keine Restglasphase oder eine aus dem kristallisierbaren Glas hervorgegangene Kristallphase angeordnet ist.

Als Porosität 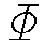 des zumindest teilweise kristallisierten Glases werden die Verhältnisse der Volumina Vₚ der in dem zumindest teilweise kristallisierbaren Glas oder dem zumindest teilweise kristallisierten Glas vorhandenen Poren relativ zum Volumen Vₒ des zumindest teilweise kristallisierbaren Glases oder zumindest teilweise kristallisierten Glases oder dessen Grünglas ohne Poren angesehen und es gilt somit 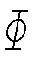 = Vₚ/ (Vₒ₊Vₚ). Soweit dieser Wert in Prozent angegeben wird, bezieht sich diese Angabe dann auf den prozentualen Volumenwert der Poren relativ zum gesamten Volumen des zumindest teilweise kristallisierbaren Glases oder zumindest teilweise kristallisierten Glases.

Als strukturiert verteilt werden Poren dann angesehen, wenn diese nicht vollständig homogen verteilt angeordnet sind und insbesondere die lokale Porendichte oder lokale Porosität nicht im gesamten Volumen des zumindest teilweise kristallisierbaren Glases oder zumindest teilweise kristallisierten Glases konstant ist.

Bevorzugt sind die Poren bzw. ist die Porosität dabei so verteilt, dass im Grenzbereich des zumindest teilweise kristallisierten Glases ein Gradient der Porosität vorliegt in der Form, dass von der Grenzfläche und/oder von der Oberfläche des zumindest teilweise kristallisierten Glases hin zu dessen Mitte die Porendichte zunimmt. Der Grenzbereich variiert dabei vorzugsweise hinsichtlich seiner Ausdehnung zwischen minimal 5 µm und höchstens 200 µm Dicke, bevorzugt zwischen 20 µm und 50 µm.

Soweit im Stand der Technik durch die Verwendung von Sinterkörpern, insbesondere von nicht hoch verdichteten Sinterkörpern, Porositäten in Fügematerialien auftraten, waren diese in der Regel homogen und folglich im Sinne der vorstehenden Definition nicht strukturiert, insbesondere nicht gesteuert strukturiert verteilt angeordnet.

Als Grünglas wird ein Glas, hier ein zumindest teilweise kristallisierbares Glas bezeichnet, welches im Wesentlichen noch nicht kristallisiert ist, dies bedeutet einen volumenbezogenen Kristallanteil oder Anteil von Kristallphasen von weniger als 0,1 % aufweist.

Im Rahmen der vorliegenden Erfindung wird unter einem kristallisierbaren Glas ein Glas verstanden, welches einer Kristallisation, vorzugsweise einer steuerbaren, besonders bevorzugt einer gesteuerten Kristallisation, zugänglich ist, sodass eine Struktur erhalten wird, in der eine vorzugsweise enge Verteilung der räumlichen Ausdehnung der Kristalle oder Kristallite, welche derselben Kristallphase zuzurechnen sind, resultiert. Bevorzugt weisen die Kristalle bzw. Kristallite dabei räumliche Abmessungen auf, welche im Bereich bis höchstens 50 µm liegen. Weiterhin bevorzugt weichen diese Kristallitgrößen, welcher derselben Kristallphase zuzurechnen sind, von einem Mittelwert der Kristallitgrößen höchstens um +/- 95 % voneinander ab.

Im Sinne der vorliegenden Erfindung wird dabei unter dem Begriff der Kristalle, welcher derselben Kristallphase zuzurechnen sind, verstanden, dass diese Kristalle in gleicher Weise kristallisieren, also die Kristallstruktur dieser Kristalle in dem Sinne gleich ist, dass die Gitterkonstanten dieser Kristalle voneinander um nicht mehr als 20% abweichen. Solche Abweichungen können sich beispielsweise durch lokal auftretende Zusammensetzungsschwankungen ergeben. Beispielsweise können die Kristalle als Mischkristalle vorliegen. Beispielsweise kann ein zumindest teilweise kristallisiertes Glas als Kristallphase Wollastonit CaSiO₃ umfassen, wobei unter diese Kristallphase im Sinne der vorliegenden Erfindung auch solche Kristalle zuzurechnen sind, bei denen die stöchiometrische Zusammensetzung von der des reinen Wollastonit in dem Sinne abweicht, dass weitere Bestandteile umfasst sind, beispielsweise sind dies bei einer ersten bevorzugten Ausführungsform mit Yttrium dotiertes CaSiO₃. Umfasst sind vom Begriff "derselben Kristallphase" im Sinne der vorliegenden Erfindung daher insbesondere:
- Wollastonit: Wollastonit-Kristalle sowie Wollastonit-ähnliche Kristalle in dem Sinne, dass die Gitterkonstanten, insbesondere die räumlichen Dimensionen der Elementarzelle, um nicht mehr als 20% voneinander abweichen,
- Diopsid, CaMgSi₂O₆: Diopsid sowie Diopsid-ähnliche Kristalle in dem Sinne, dass die Gitterkonstanten, insbesondere die räumlichen Dimensionen der Elementarzelle, um nicht mehr als 20% voneinander abweichen,
- ZrO₂: ZrO₂ umfasst tetragonales und kubisches ZrO₂ sowie insbesondere auch Y-stabilisiertes ZrO₂ in tetragonaler oder kubischer Modifikation. Bevorzugt liegt ZrO₂ als Y-stabilisiertes ZrO₂ in tetragonaler Modifikation vor.

Beispielsweise können bei der zweiten bevorzugten Ausführungsform auch als kristallisierende Phasen Mg- oder Ca-stabilisiertes Zirconiumdioxid (ZrO₂), Enstatit (MgSiO₃), Forsterit (Mg₂SiO₄), Calciumzirconiumsilikate (Ca₂ZrSi₄O₁₂), Anorthit (CaAl₂Si₂O₈) und/oder Diopsid (CaMgSi₂O₆) vorliegen.

Durch die Kristallisation wird aus einem kristallisierbaren Glas ein zumindest teilweise kristallisiertes Glas, also ein Glas, dessen Kristallphasenanteil, bezogen auf das Volumen, mehr als 0,1 % beträgt. Ein solches zumindest teilweise kristallisiertes Glas, welches mindestens eine Kristallphase sowie eine glasige Phase, beispielsweise ein zumindest teilweise kristallisierbares Glas oder eine Restglasphase, umfasst, wird im Rahmen der vorliegenden Erfindung auch als Glaskeramik bezeichnet. Es ist auch möglich, dass die Glaskeramik in dem Sinne vollständig kristallisiert vorliegt, dass die kristallisierte Phase mehr als 99 Vol.-% umfasst, beispielsweise bis zu 99,9 Vol.-%. Generell kann die Restglasphase oder glasige Phase bei dem zumindest teilweise kristallisierten Glas 0,1 im Verhältnis zum gesamten Gewicht des zumindest teilweise kristallisierbaren Glases bis 99 Gew.-% umfassen.

Bevorzugt ist der Anteil der Restglasphase noch so hoch, dass eine gute Benetzung des Einhausungsmaterials gegeben ist. Vorteilhaft beträgt dafür der Anteil der Restglasphase am zumindest teilweise kristallisierten Glas mindestens 5 Vol.-%, bevorzugt mindestens 10 Vol.-%.

Die Kristallisation kann hierbei gesteuert in dem Sinne ablaufen, dass eine gezielte Temperaturbehandlung, welche beispielsweise zur Bildung einer Vorläuferphase für die mindestens eine Kristallphase, durchgeführt wird, beispielsweise eine sogenannte Keimbildung. Es ist aber auch möglich, dass die Kristallisation ungesteuert in der Form erfolgt, dass sie während eines sonstigen Verfahrungsschrittes auftritt, beispielsweise im Rahmen einer thermischen Behandlung, in welchem eine hermetisch dichte Verbindung zwischen einem Material, beispielsweise dem Material einer Einhausung, und dem zumindest teilweise kristallisierten Glas erzeugt wird, ohne dass weitere Verfahrungsschritte zur gezielten Kristallisation erfolgten.

Als Kristalle werden im Rahmen der vorliegenden Erfindung Festkörper mit einer dreidimensional-geordneten Struktur bezeichnet. In einem teilweise kristallisierten Glas weisen die Kristalle in der Regel lediglich geringe Größen von ca. 0,1 µm bis zu höchstens 20 µm auf. Solche Kristalle geringer Größe werden auch als Kristallite bezeichnet. Im Rahmen der vorliegenden Erfindung werden daher, sofern nicht ausdrücklich anders bezeichnet, die Begriffe Kristall und Kristallit synonym verwendet.

Weiterhin umfasst der Begriff der Durchführung im Sinne der vorliegenden Erfindung einen elektrischen Leiter, welcher von einem elektrisch isolierenden Material umgeben und in einer Durchführungsöffnung befestigt ist. Im Rahmen der vorliegenden Erfindung werden die Begriffe der "Durchführung" und des "Durchführungselements", soweit nicht ausdrücklich anders ausgeführt, synonym verwendet.

Als Verbindung wird im Rahmen der vorliegenden Offenbarung eine Verbindung zwischen zumindest zwei Materialien verstanden, beispielsweise die Verbindung eines zumindest teilweise kristallisierten Glases mit einem Fügepartner.

Diese zwei Materialien können durch ein weiteres Material miteinander verbunden werden oder sein. Beispielhaft kann eine solche Verbindung als Durchführung ausgebildet sein, insbesondere, wenn mehr als eine Verbindung vorliegt. Allerdings ist es auch möglich, dass eine Verbindung als mechanische Verbindung zwischen zwei Werkstücken ausgebildet ist, beispielsweise in Art einer linienartig ausgebildeten Verbindungsnaht, wobei der mechanische Zusammenhalt auch durch ein weiteres Material, welches die beiden Werkstücke miteinander verbindet, gewährleistet werden kann. Allgemein ist somit auch die Durchführung, bei welcher ein Material von einem weiteren Material umgegeben ist und dieses in einer Durchführungsöffnung in einem dritten Material befestigt ist, vom Begriff der Verbindung umfasst.

Im Rahmen der vorliegenden Erfindung werden die Begriffe der Verbindung und des Verbindungselements weitgehend synonym verwendet. Eine bevorzugte Form des Verbindungselements ist ein Dichtungselement, welches eine hermetisch und insbesondere fluiddichte Verbindung zu dem zumindest teilweise kristallisierten Glas bereitstellt.

Im Sinne der vorliegenden Erfindung wird unter einem Metalloxid mit einem mittelgroßen Kation vorzugsweise ein Metalloxid mit mittelgroßem Kation im Sinne der Mineralklassifikation nach Strunz, 9. Auflage, verstanden. Ein mittelgroßes Metallkation weist dabei vorteilhaft einen Ionenradius zwischen 0,50 Å und 0,90 Å auf. Insbesondere umfasst vom Begriff des mittelgroßen Kations ist dabei Zr⁴⁺.

Unter einem Metalloxid mit einem mittelgroßen Kation wird daher in der vorliegenden Erfindung beispielsweise ZrO₂ verstanden sowie solche Metalloxide, in welchem mindestens 50 % der im Oxid beinhalteten Metallionen als mittelgroße Metallionen vorliegen. Insbesondere können daher auch Metallionen in der Kristallstruktur vorliegen, welche größer oder kleiner als ein "mittelgroßes Kation" im Sinne der vorliegenden Erfindung sind, beispielsweise indem es zu einem partiellen Ersatz eines oder mehrerer Metallionen gekommen ist. Insofern wird im Sinne der vorliegenden Erfindung auf die betreffende Struktur des Metalloxids abgestellt. Beispielhaft ist es möglich, dass bei der ersten bevorzugten Ausführungsform ein Teil des Zirkoniums in ZrO₂ durch Yttrium oder dessen Oxid ersetzt ist.

Gemäß einer weiteren Ausführungsform der Erfindung ist das zumindest teilweise kristallisierte Glas so ausgebildet, dass die Poren zumindest teilweise in der Nähe von Kristallen angeordnet sind.

Diese spezielle Erscheinungsform des zumindest teilweise kristallisierten Glases gemäß einer Ausführungsform wird darauf zurückgeführt, dass die Poren während der Kristallisation, insbesondere als Folge der Kristallisation, entstehen.

Gemäß einer weiteren Ausführungsform der Erfindung beträgt der Kristallgehalt des zumindest teilweise kristallisierten Glases mindestens 25 %, bezogen auf das gesamte Volumen des zumindest teilweise kristallisierten Glases, bevorzugt mindestens 50 % und besonders bevorzugt mindestens 60 %.

Bevorzugt beträgt die Porosität mindestens 3 % bezogen auf das gesamte Volumen des zumindest teilweise kristallisierten Glases, bevorzugt mindestens 5 %, besonders bevorzugt mindestens 10 % oder sogar 20 %.

Gemäß der ersten bevorzugten Ausführungsform der Erfindung umfasst das zumindest teilweise kristallisierte Glas folgende Oxide in Gew.-%:

| | |
|---|---|
| SiO₂: | 20 bis 60, bevorzugt 25 bis 50 |
| AL₂O₃: | 0,5 bis 20, bevorzugt 0,5 bis 10 |
| CaO: | 10 bis 50 |
| MgO: | 0,5 bis 50, bevorzugt 0,5 bis 10 |
| Y₂O₃: | 0,1 bis 20, bevorzugt 3 bis 20 |
| ZrO₂: | 0,1 bis 25, bevorzugt 3 bis 20 |
| B₂O₃: | 1 bis 15, bevorzugt 3 bis 12, |

wobei weiterhin HfO₂ optional bis zu 0,25 Gew.-% enthalten sein kann.

Gemäß der zweiten bevorzugten Ausführungsform der Erfindung umfasst das zumindest teilweise kristallisierte Glas folgende Oxide in Gew.-%:

| | | |
|---|---|---|
| SiO₂: | 36 bis 54, | bevorzugt 40 bis 54 |
| AL₂O₃: | 8 bis 16, | bevorzugt 8 bis 13 |
| CaO: | 0 bis 35, | bevorzugt 5 bis 25 |
| MgO: | 0 bis 17, | bevorzugt 3 bis 14 |
| RO: | 8 bis 39, | bevorzugt 8 bis 35 |
| ZrO₂: | 0 bis 25, | bevorzugt 0 bis 17 |
| B₂O₃: | 0 bis 3, | bevorzugt 0 bis 2, besonders bevorzugt 0 |

wobei der Anteil RO die Oxide BaO, SrO, MgO, ZnO jeweils einzeln oder in Summe oder in beliebigen Mischungen bezeichnet.

Bevorzugt beträgt RO einzeln oder in jeder beliebigen Kombination in Gew.%:

| | |
|---|---|
| BaO | 0 - 36 |
| MgO | 0 - 22 |
| CaO | 0 - 25. |

Ebenso bevorzugt ist Y₂O₃ = 0. Dies konnte durch einen Ersatz des Y₂O₃ mittels MgO und/oder CaO beispielsweise in der Stabilisierung der ZrO₂-Kristallphase erzielt werden.

Bei einer bevorzugt beträgt bei allen Ausführungsformen der Kristallanteil des zumindest teilweise kristallisierten Glases mehr als 50 Vol.%, bevorzugt mehr als 60 Vol.%. Dieser hohe Kristallphasenanteil trägt zusätzlich zur Erhöhung der Viskosität bei und führt somit zu einer erhöhten mechanischen Stabilität bei hohen Temperaturen. Weiterhin führt die hohe Kristallisation und damit teilweise auftretende Verzahnung der Kristallite zu einer Lokalisierung der Poren und ermöglicht somit die gesteuerte Porosität maßgeblich.

Dieses zumindest teilweise kristallisierbare Glas erreicht seine hohe Temperaturbeständigkeit insbesondere auch über eine höhere Viskosität der Restglasphase.

Eine wichtige Kristallphase des zumindest teilweise kristallisierbaren Glases ist bei Werten des ZrO₂ > 0 beispielsweise Ca- oder Mg-stabilisiertes ZrO₂.

Dies ist eine thermisch stabilere Phase als Y₂O₃-stabilisiertes ZrO₂.

Generell ist jedoch ZrO₂ thermisch schwierig zu stabilisieren, denn bei Absenkung auf niedrigere Temperaturen kann eine Phasenumwandlung in weniger koordinierte Phasen, beispielsweise von tetraklin zu monoklin, zu einem Volumensprung mit einer dabei einhergehenden Volumenverringerung führen, so dass hierdurch Risse entstehen können.

Bei der zweiten bevorzugten Ausführungsform werden folglich andere als ZrO₂-basierte Kristallphasen in dem zumindest teilweise kristallisierbaren Glas verwendet.

Vorteilhaft beträgt der Anteil von BaO in dem zumindest teilweise kristallisierbaren Glas weniger 36 Gew.%. Hierdurch bildet sich weniger Chromatphase an der Grenzfläche des zumindest teilweise kristallisierbaren Glases mit Cr-haltigen Stählen, beispielsweise Edelstählen, insbesondere, wenn diese Grenzfläche Teil einer Verbindung oder eines Verbindungs- und Durchführungselements ist.

Das zumindest teilweise kristallisierbare Glas ist in einer besonders vorteilhaften Version der zweiten bevorzugten Ausführungsform frei von B₂O₃.

Der mögliche B₂O₃-Gehalt in der ersten bevorzugten Ausführungsform ist für die Nutzung in vielen Anwendungen und Temperaturbereichen vorteilhaft. So führt dieser B₂O₃-Gehalt zu einer sehr guten Benetzung an den Fügepartnern schon vor der Kristallisation bei moderaten Temperaturen. Diese Benetzung ist unerlässlich für eine hermetisch dichte Verbindung, die in vielen Anwendungen benötigt wird. Wird hingegen eine Benutzung des Verbunds bei über 1000 °C beabsichtigt, so ist der B₂O₃-Gehalt nicht unbedingt von Vorteil, da dieser zu einer niedrigen Viskosität der Restglasphase bei diesen Temperaturen führen kann, was zu einer stark verminderten mechanischen Stabilität führen kann.

In der zweiten bevorzugten Ausführungsform wird daher weitgehend auf die Verwendung von B₂O₃ in der Zusammensetzung des zumindest teilweise kristallisierbaren oder kristallisierten Glases verzichtet, somit werden Restglasphasen mit hohen Viskositäten bei Temperaturen über 1000 °C und somit einer mechanischen Stabilität bei bis zu 1200 °C oder teilweise sogar mehr als 1200 °C, insbesondere bis zu 1270 °C ermöglicht.

Weiterhin konnte auf überraschende Weise bei der zweiten Ausführungsform durch Ersatz mit MgO und CaO sogar auf Y₂O₃ verzichtet werden, was zu einer erheblichen Kosteneinsparung in der Anwendung führen kann.

Normalerweise wird B₂O₃ für die Benetzung eines Metalls mit Gläsern benötigt. Weil das vorliegend offenbarte zumindest teilweise kristallisierbare Glas zumindest der zweiten bevorzugten Ausführungsform bei höheren Temperaturen an einem Metall anschmelzen kann, welches auch als anglasen oder als einglasen bezeichnet wird, kann in überraschender Weise bei einer bevorzugten Version der zweiten bevorzugten Ausführungsform auf B₂O₃ sogar ganz verzichtet werden. Diese Temperatur, bei welcher das zumindest teilweise kristallisierbare Glas an einem Metall anschmilzt, an- oder in einem Durchführungs- oder Verbindungselement an dessen Einhausung anglast, wird auch als Halbkugeltemperatur bezeichnet.

Das zumindest teilweise kristallisierte Glas ist gemäß einer nochmals weiteren Ausführungsform der bevorzugten ersten und zweiten Ausführungsform so ausgebildet, dass die zumindest eine Kristallphase ein Metalloxid mit einem mittelgroßen Kation und/oder vorzugsweise ein Kettensilikat umfasst. Als ein mittelgroßes Kation wird im Sinne der vorliegenden Erfindung dabei ein Kation verstanden, welches einen Ionenradius zwischen 0,5 Å und 0,9 Å aufweist und vorzugsweise in sechsfacher, beispielsweise oktaedrischer, Koordination durch Sauerstoff vorliegt. Insbesondere vom Begriff des mittelgroßen Kations umfasst ist hierbei das vierwertige Zirkonium-Ion Zr⁴⁺.

Unter einem Kettensilikat werden solche Silikate verstanden, bei welchen die SiO₄⁴-Tetraeder eckenverknüpft in Form endloser Bänder oder Ketten vorliegen. Beispiele für solche Kettensilikate umfassen beispielsweise die Minerale der Pyroxene. Ein weiteres Beispiel für ein Kettensilikat ist Wollastonit.

Gemäß einer vorteilhaften Ausführungsform der ersten bevorzugten Ausführungsform umfasst das Metalloxid ZrO₂ und bevorzugt zusätzlich Yttrium. Ganz besonders bevorzugt umfasst das Metalloxid Yttrium-stabilisiertes ZrO₂, welches am meisten bevorzugt in tetragonaler Modifikation vorliegt.

Gemäß einer nochmals weiteren Ausführungsform der bevorzugten ersten und zweiten Ausführungsform umfasst das Kettensilikat als silikatische Baueinheit SiO₃²- und ist bevorzugt als Erdalkalioxid-umfassendes Kettensilikat ausgebildet.

Dabei ist gemäß einer weiteren bevorzugten Ausgestaltung das Erdalkalioxid CaO und ist bei dem Kettensilikat bevorzugt weiterhin Yttrium umfasst. Beispielsweise kann das Kettensilikat als Wollastonit, bevorzugt als Yttrium-umfassender Wollastonit, ausgebildet sein.

Gemäß einer nochmals weiteren Ausführungsform der bevorzugten ersten und zweiten Ausführungsform der Erfindung ist das Kettensilikat als Erdalkalioxid umfassendes Kettensilikat mit Pyroxen-Struktur ausgebildet, wobei das Erdalkalioxid bevorzugt CaO und MgO umfasst. Beispielsweise kann das Kettensilikat als Diopsid ausgebildet sein.

Weiterhin ist es gemäß einer Ausgestaltung der Erfindung möglich, dass zwei unterschiedliche Kettensilikate im zumindest teilweise kristallisierten Glas umfasst sind. Beispielhaft kann das zumindest teilweise kristallisierte Glas Wollastonit bzw. Y-umfassenden Wollastonit umfassen sowie Diopsid. Ebenfalls ist es möglich, dass ein oder auch zwei Kettensilikate zusammen mit einem Metalloxid mit einem mittelgroßen Kation, beispielsweise mit ZrO₂, bevorzugt mit Y-dotiertem ZrO₂, vorliegen.

Bevorzugt ist das zumindest teilweise kristallisierte Glas der bevorzugten ersten und zweiten Ausführungsform, insbesondere auch bei oder als Teil einer Verbindung des zumindest teilweise kristallisierten Glases mit einem Fügepartner, so ausgebildet, dass die Größe der Poren zwischen 2 µm und 30 µm, bevorzugt zwischen 5 µm und 25 µm liegt.

Gemäß einer besonders bevorzugten Ausführungsform der bevorzugten ersten und zweiten Ausführungsform der Erfindung ist das zumindest teilweise kristallisierte Glas, insbesondere auch bei oder als Teil einer Verbindung des zumindest teilweise kristallisierten Glases mit einem Fügepartner, so ausgebildet, dass die Porosität einen Gradienten aufweist, und die Porosität in einem Abstand von weniger als 10 µm, bevorzugt weniger als 20 µm zu einer Grenzfläche des zumindest teilweise kristallisierten Glases mit einem Fügepartner weniger als 10 % beträgt, vorzugsweise weniger als 5 % und am bevorzugtesten weniger als 3 % beträgt, wobei die Porosität zur Grenzfläche oder zu der Oberfläche des zumindest teilweise kristallisierten Glases hin abnimmt.

Gemäß einer Ausführungsform der bevorzugten ersten und zweiten Ausführungsform weist die Porosität des zumindest teilweise kristallisierbaren Glases, insbesondere auch bei oder als Teil einer Verbindung des zumindest teilweise kristallisierten Glases mit einem Fügepartner, einen Gradienten auf, wobei die Porosität von der Grenzfläche und/oder der Oberfläche des zumindest teilweise kristallisierten Glases zu dessen Innerem hin zunimmt, und insbesondere auf den Maximalwert ansteigt, welcher 20 % oder auch mehr betragen kann.

Gemäß einer nochmals weiteren Ausführungsform der bevorzugten ersten und zweiten Ausführungsform weisen die Kristallite des zumindest teilweise kristallisierbaren Glases, insbesondere auch bei oder als Teil einer Verbindung des zumindest teilweise kristallisierten Glases mit einem Fügepartner eine Größe zwischen 0,1 µm bis 50 µm auf.

Vorteilhafte Eigenschaften ergeben sich bei allen beschriebenen Ausführungsformen für eine Verbindung, insbesondere eine Verbindung zu einem Metall oder auch für ein Durchführungs- oder Verbindungselement, wenn diese ein zumindest teilweise kristallisiertes Glas umfasst wie dieses vorliegend offenbart wird und insbesondere auch in den Ansprüchen erfasst ist.

Kritische Eigenschaften des zumindest teilweise kristallisierten Glases betreffen auch dessen elektrische Eigenschaften. Bevorzugt ist das zumindest teilweise kristallisierte Glas elektrisch isolierend ausgebildet, was insbesondere für Durchführungen von Bedeutung ist, bei denen zwei elektrisch leitende Materialien, beispielsweise Metalle, miteinander verbunden werden, wobei diese Materialien voneinander elektrisch isoliert bleiben sollen.

Weiterhin hängt der zwischen den beiden miteinander durch das zumindest teilweise kristallisierte Glas verbundenen Materialien zu messende elektrische Widerstand neben dem spezifischen Durchgangswiderstand des elektrisch isolierend ausgestalteten zumindest teilweise kristallisierten Glases auch von der realisierten Geometrie des Durchführungs- oder Verbindungselement ab.

Gemäß einer Ausführungsform der bevorzugten ersten und zweiten Ausführungsform der Erfindung weist das zumindest teilweise kristallisierte Glas eine hohe elektrische Isolierung bis zu 350°C, bevorzugt bis zu 600°C und besonders bevorzugt bis zu 900°C auf. Als hohe elektrische Isolierung wird hierbei ein Wert von von 10⁸ bis 10¹⁴ Ohmcm bei einer Temperatur von 350 °C verstanden.

So unterscheidet sich auch der thermische Ausdehnungskoeffizient der vom zumindest teilweise kristallisierten Glas umfassten Kristallphasen lediglich um höchstens +/- 4*10⁻⁶/K von dem thermischen Ausdehnungskoeffizienten des Grünglases und auch der Restglasphase. Besonders bevorzugt liegt der thermische Ausdehnungskoeffizient der Kristallphasen, welche von dem zumindest teilweise kristallisierten Glas umfasst sind, zwischen 5*10⁻⁶/K und 12*10⁻⁶/K. Es wird vermutet, dass die verbesserte mechanische Stabilität auch durch dieses Verhältnis der thermischen Ausdehnungskoeffizienten unterstützt wird. Es handelt sich hierbei um den linearen thermischen Ausdehnungskoeffizienten nach ISO 7991.

Es hat sich weiterhin gezeigt, dass die Poren des zumindest teilweise kristallisierten Glases nicht bereits im Sinterkörper, welcher aus Grünglas gebildet und aus welchem das zumindest teilweise kristallisierte Glas hervorgegangen ist, vollständig selbst angelegt oder bereits vorhanden sind. Vielmehr wird ein Sinterling, somit ein Sinterkörper mit einem hohen Sintergrad erreicht. Der Sintergrad kann hierbei durch das Verhältnis der tatsächlichen Dichte, also der beispielsweise durch Messung ermittelten Dichte des Sinterkörpers, und der theoretischen Dichte des Sinterkörpers, bestimmt werden. Bevorzugt ist die tatsächliche Dichte des Sinterkörpers oder Sinterlings höchstens um 10 % geringer, vorteilhaft und vorzugsweise höchstens um 5 % geringer, als die theoretische Dichte des zumindest teilweise kristallisierbaren, jedoch noch nicht kristallisierten Glases ohne jegliche Poren. Der Sintergrad beträgt in diesem Fall mindestens 95 %, bevorzugt mindestens 97 % oder 98 % und am bevorzugtesten mindestens 99 %.

Die theoretische Dichte ergibt sich hierbei als der Wert, welcher für einen Formkörper gleicher stöchiometrischer Zusammensetzung erhalten würde, der ohne Poren vorliegt. Handelt es sich beispielsweise um einen Sinterling bzw. Sinterkörper, welcher aus Glaspulver, beispielsweise aus einem zumindest teilweise kristallisierbaren Glaspulver, besteht, so entspricht die theoretische Dichte der des aus dem Schmelzprozess erhaltenen dichten Glases. Da der Sinterkörper aus Glaspulver, Pressen und einem thermischen Verdichtungsschritt erhalten wird, weist er in der Regel technisch bedingt eine geringere Dichte auf, welche als Maß für den Sintergrad dienen kann. Die Abweichung zwischen theoretischer Dichte und tatsächlicher Dichte ist dabei bevorzugt so klein wie möglich.

Überraschend hat sich nun wie einleitend bereits erwähnt gezeigt, dass die Poren des zumindest teilweise kristallisierten Glases nicht bereits im Sinterling oder Sinterkörper vollständig angelegt oder bereits vollständig vorhanden sind, sondern vielmehr zum Großteil gleichzeitig mit oder während der Kristallisation entstehen. Die Aussage, dass die Poren des zumindest teilweise kristallisierenden Glases nicht bereits im Sinterling, somit dem Sinterkörper durch den Vorgang des Sinterns angelegt oder bereits vorhanden sind, bedeutet im Sinne der vorliegenenn Offenbarung, dass nur verhältnismäßig wenige Poren verbleiben, die durch den Vorgang des Sinterns hervorgerufen und nicht während des Kristallisierens simultan mit der Kristallisation in dem zumindest teilweise kristallisierbaren Glas entstanden sind.

Das Verhältnis der bereits im Sinterkörper, Sinterling oder Formkörper angelegten oder vorhandenen Poren relativ zu den erfindungsgemäß entstandenen Poren beträgt beispielsweise bei einem Sintergrat von etwa 99% bei den hier beschriebenen bevorzugten Ausführungsformen etwa mindestens 1,8 oder liegt sogar höher.

Dabei ist besonders überraschend, dass die Porosität *ϕ* einen umso größeren Wert annimmt, je höher die Temperatur während einer thermischen Behandlung gewählt wird. Insbesondere erhöht sich mit einer Temperaturerhöhung sowohl die mittlere Größe der Poren als auch deren Volumen. Hierdurch lässt sich durch die Wahl der Temperatur und der Haltezeit bei einer bestimmten Temperatur die Porosität gezielt steuern. Üblicherweise würde der Fachmann erwarten, dass sich die Dichtigkeit einer Verbindung erhöht, je höher die Temperatur der thermischen Behandlung gewählt wird. Dennoch ist durch das Auftreten der gesteuerten Porosität in überraschender Weise die Dichtigkeit der Verbindung nicht beeinträchtigt. Vielmehr ist auch weiterhin eine fluiddichte, bevorzugt eine im Wesentlichen hermetisch dichte Verbindung, insbesondere durch die strukturiert angeordneten oder strukturiert verteilten Poren möglich.

Ebenso überraschend hat sich gezeigt, dass durch die strukturiert verteilte Porosität des zumindest teilweise kristallisierten Glases bei gleichzeitiger Hermetizität der Verbindung auch eine besonders hohe mechanische Stabilität des Durchführungs- oder Verbindungselements erzielt wird. So hat sich gezeigt, dass die Poren das Risswachstum in der Form unterdrückt wird, dass Risse, welche in eine Pore münden, von dieser aus nicht weiterwachsen.

Insbesondere hat sich gezeigt, dass nach erfolgter zumindest partieller Kristallisation das erhaltene Gefüge so stabil ist, dass auch eine Temperaturbelastung, welche im Bereich der Kristallisationstemperatur liegt, zu keiner signifikanten Änderung des Gefüges hinsichtlich von dessen Kristallisationsgrad führt. Beispielhaft ist es daher möglich, dass die Einsatztemperatur des solcherart erhaltenen zumindest teilweise kristallisierten Glases bei oder sogar oberhalb von der Kristallisationstemperatur liegt. Insbesondere sind damit auch Durchführungs- oder Verbindungselemente, welche ein solches zumindest teilweise kristallisiertes Glas umfassen, mit sehr hohen Einsatztemperaturen, welche beispielsweise im Bereich der Kristallisationstemperatur liegen, herstellbar.

Ein Formkörper, dies bedeutet ein geformter Sinterling oder geformter Sinterkörper aus einem zumindest teilweise kristallisierbarem Glas ist herstellbar nach einem Verfahren, welches mindestens die folgenden Schritte umfasst:
1. Schmelzen des Grünglases. Das Schmelzen des Grünglases erfolgt in üblicher Weise, indem Ausgangsstoffe, das sogenannte Gemenge, in einem temperaturfesten Behältnis, dem sogenannten Schmelzaggregat, miteinander vermischt und auf eine Temperatur gebracht werden, bei der das Gemenge vollständig aufgeschmolzen wird. Diese beträgt in der Regel beispielsweise mindestens 1200°C vorzugsweise zusammen mit einer zügigen Abkühlung, welche durch wassergekühlte, Raumtemperatur aufweisende Walzen, insbesondere wie nachfolgen beschrieben erfolgen kann. Es ist weiterhin möglich, dass Zusatzstoffe, welche der Optimierung des Schmelzprozesses dienen, beispielsweise in Form von Läutermitteln, dem Gemenge zugesetzt werden. Üblicherweise kann das Schmelzen in der Wanne oder in einem Tiegel erfolgen. Während des Schmelzvorgangs können weitere Schritte, beispielsweise zur Homogenisierung der Schmelze, erfolgen. Hierbei umfasst das Grünglas ein Glas mit der Zusammensetzung des zumindest teilweise kristallisierten Glases, jedoch vorzugsweise unkristallisiert.
2. Ausbringen des flüssigen Glases aus dem Schmelzaggregat. Die in Schritt 1. erhaltene Schmelze wird, gegebenenfalls nach Durchführung weiterer Verfahrensschritte, beispielsweise zur Homogenisierung der Schmelze, aus dem Schmelzaggregat ausgebracht. Beispielsweise kann dies durch einen Walzprozess erfolgen, welcher apparativ an eine Schmelzwanne angeschlossen ist. Es ist aber auch möglich, dass das Schmelzaggregat als Tiegel ausgebildet ist und das Ausbringen des flüssigen Glases bevorzugt durch Gießen erfolgt. Besonders bevorzugt erfolgt das Ausbringen durch Gießen, insbesondere zwischen mindestens zwei wassergekühlte Walzen, sodass bandförmige Glaskörper erhalten werden.
   Unter einem bandförmigen Glaskörper wird hierbei ein Körper dann verstanden, wenn seine Dicke, beispielsweise definiert durch die Weite des Spaltes zwischen den mindestens zwei Walzen, geringer ist als die in Spaltrichtung verlaufende räumliche Ausdehnung und weiterhin bevorzugt die räumliche Ausdehnung in Gussrichtung größer ist als die parallel zur Spaltrichtung verlaufende räumliche Ausdehnung, sodass flache, langgestreckte Glaskörper erhalten werden.
3. Mahlen der in Schritt 2. erhaltenen Glaskörper, sodass ein Glaspulver erhalten wird. Das Mahlen des Pulvers kann in üblichen Aggregaten erfolgen, beispielsweise in einer Kugelmühle, wobei die Mahlung sowohl nass, also unter Verwendung eines flüssigen Mediums, beispielsweise Wasser oder mit einer weiteren Flüssigkeit, beispielsweise einer organischen Flüssigkeit wie mit einem Alkanol, versetztes Wasser, oder auch unter einer organischen Flüssigkeit, beispielsweise einem Alkanol, erfolgen kann.
4. Granulieren des Glaspulvers. In einem weiteren Schritt wird das in Schritte 3. erhaltene Glaspulver granuliert, d.h. mit weiteren Substanzen, welche dem Fachmann bekannt sind, versetzt, beispielsweise Stellmitteln auf organischer Basis. Weiterhin ist es auch möglich, in diesem Schritt weitere Substanzen zuzugeben, welche beispielsweise die Entstehung von Poren fördern können, beispielsweise in Form von Substanzen, welche sich unter Einwirkung thermischer Energie zersetzen, wobei mindestens eine fluide Phase, beispielsweise ein Gas, freigesetzt wird. Beispielhaft umfassen solche weiteren Substanzen carbonathaltige Substanzen, welche sich unter Bildung von CO₂ zersetzen, oder Wasser umfassende Substanzen, beispielsweise Hydroxide oder Hydrate, welche sich unter Bildung von Wasser zersetzen. Jedoch haben die Erfinder festgestellt, dass sich Poren auch ohne die Zugabe dieser weiteren Substanzen ausbilden. Soweit diese Substanzen beigegeben werden, dienen diese weiteren Substanzen lediglich einer weiteren gezielten Beeinflussung der Porenbildung, sind jedoch grundsätzlich für die Ausführung der Erfindung nicht nötig.
5. Pressen. In einem weiteren Schritt erfolgt sodann das Pressen des granulierten Pulvers, wobei das Pressen in üblichen Pressverfahren erfolgt, beispielsweise durch Ausüben eines isostatischen Drucks oder durch heißisostatisches Pressen (HIP). Darüber hinaus kann eine Formung auch durch Extrusion oder Injection Molding entstehen.
*6*. Sintern. Der gepresste, extrudierte oder durch Inection-Molding geformte Körper wird sodann gesintert. Der Sintervorgang kann durch die Angabe des Verhältnisses der tatsächlichen, beispielsweise durch Messung bestimmten, Dichte des gesinterten Körpers im Vergleich zur theoretischen Dichte (welche sich aus der Dichte des Grünglases ergibt) ermittelt werden. Bevorzugt wird ein Sintergrad erreicht, bei welchem die tatsächliche Dichte des gesinterten Körpers um höchstens 10 % geringer ist als die theoretische Dichte. Bevorzugt erfolgt das Sintern daher unter Erreichen eines hohen Sintergrades. Das Sintern erfolgt dabei durch Erhitzen des gepressten Körpers auf eine Temperatur T_{S}.

Soweit der Sinterling oder Sinterkörper bei dem vorstehend beschriebenen Verfahren noch nicht die erwünschte Form aufweist, kann dieser optional durch weitere Materialbearbeitung diese Form erhalten und in den Formkörper überführt werden.

Zur Herstellung einer Verbindung eines zumindest teilweise kristallisierten Glases mit einem Einhausungsmaterial oder einem Dichtelement, vorzugsweise einem temperaturstabilen Einhausungsmaterial oder Dichtelement, können bevorzugt die weiteren nachfolgenden Verfahrensschritte durchgeführt werden.

Bei diesen Verfahrensschritten umfasst das Material des Fügepartners vorzugsweise das Material eines Einhausungsmaterials oder Dichtelements sowie die hierbei erhaltene Verbindung bevorzugt ein Metall, insbesondere ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitische Stähle wie 1.4828 oder 1.4841 oder eine hochtemperaturstabile keramische Verbindung, beispielsweise eine Aluminiumoxid-basierte Keramik oder eine Zirkoniumoxid-basierte Keramik beispielsweise eine Keramik, welche Y-stabilisiertes Zirkoniumoxid umfasst.
7. Erhitzen der formschlüssig verbundenen Materialien auf eine Temperatur T₂, welche größer ist als T₁, sodass es zu einer zumindest partiellen Kristallisation des Grünglases kommt, sodass ein zumindest teilweise kristallisiertes Glas vorliegt, welches Poren umfasst, wobei die Poren eine strukturierte Verteilung aufweisen.
8. Bringen des gesinterten Grünglaskörpers oder Sinterlings zwischen die oder an das zu verbindende Material zumindest eines Fügepartners, insbesondere des Materials einer Einhausung oder eines Dichtungs- und Durchführungselements. In Schritt 6. wird bereits eine Sinter-Vorform des Formkörpers aus einem zumindest teilweise kristallisierten Glas erhalten. Diese wird nun in oder an das Material des Fügepartners, insbesondere das Material einer Einhausung oder eines Dichtungselement gebracht. Ein Formkörper, dies bedeutet ein geformter Sinterling oder geformter Sinterkörper aus einem zumindest teilweise kristallisierbarem Glas wird, auch als Sinter-Vorform bezeichnet, wenn dieser beispielsweise dazu geeignet und bestimmt ist, in einer Einhausung eines Durchführungs- oder Verbindungselements aufgenommen zu werden, um mit dieser gemeinsam weiter verarbeitet zu werden. Die Sinter-Vorform kann schon die im Wesentlichen endgültige Gestalt des Formkörpers aufweisen, wenn diese bereits durch den Sintervorgang in diese für den Formkörper gewünschte Gestalt gebracht wurde. Der Formkörper kann jedoch auch aus einer formgebenden Bearbeitung, insbesondere einer materialabtragenden formgebenden Bearbeitung der Sinter-Vorform oder des Sinterlings erhalten werden, um auf diese Weise dessen erwünschte Gestalt zu erhalten. Wobei eine derartige, zwar mögliche Materialbearbeitung auch nachteilig sein kann, insbesondere, wenn dabei zu viele gegebenenfalls noch im Sinterkörper oder Sinterling vorhandene Poren freigelegt werden und nachfolgend die Grenzfläche zwischen dem zumindest teilweise kristallisierten Glas und dem Fügepartner schädigen könnten, falls diese während der thermischen Behandlung nicht entweichen oder resorbiert werden können.
9. Einglasen.
   Erhitzen der Materialien, insbesondere des Materials des gesinterten Grünglaskörpers oder Sinterlings und des zu verbindenden Materials, insbesondere des Materials eines Fügepartners, insbesondere des Materials der Einhausung oder des Dichtungs- und Durchführungselements, auf eine Temperatur T₁, sodass es zu einem Auffließen des gesinterten Grünglaskörpers kommt mit der Folge, dass die zu verbindenden Materialien, insbesondere das Material des Fügepartners und insbesondere das Material der Einhausung oder des Dichtungs- und Durchführungselements, von dem Grünglas benetzt werden, und eine formschlüssige Verbindung des Materials des Grünglaskörpers und des Materials des Fügepartners, insbesondere des Materials der Einhausung oder des Dichtungs- und Durchführungselements, vorliegt.
   Nach dem Bringen der Sinter-Vorform in oder an eine Einhausung oder ein Dichtungselement erfolgt somit anschließend das Einglasen, indem der Verbund umfassend mindestens den Fügepartner, insbesondere die Einhausung oder das Dichtungselement und die Sinter-Vorform auf eine Temperatur T₁ erhitzt wird. Diese ist größer als Tₛ. Beim Einglasen kommt es zunächst bei der Temperatur T₁ zum Auffließen des gesinterten Grünglaskörpers mit der Folge, dass die zu verbindenden Materialien von dem Grünglas benetzt werden, und eine schlüssige Verbindung der Materialien vorliegt. Im weiteren erfolgt bevorzugt ein Erhitzen der verbundenen Materialien auf eine Temperatur T₂, welche größer ist als T₁, sodass es zu einer zumindest partiellen Kristallisation des Grünglases kommt, sodass ein zumindest teilweise kristallisiertes Glas vorliegt, welches Poren umfasst, wobei die Poren vorzugsweise eine strukturierte Verteilung aufweisen. Mit dem Einglasen wird eine maximale Belastungstemperatur, Tₘₐₓ, des Formkörpers aus zumindest teilweise kristallisiertem Glas von bei der ersten bevorzugten Ausführungsform über 900°C erreicht und bei der zweiten bevorzugten Ausführungsform wird eine maximale Belastungstemperatur, Tₘₐₓ, des Formkörpers aus zumindest teilweise kristallisiertem Glas bevorzugt von mehr als 1100°C und am bevorzugtesten von 1200°C erreicht.

Dabei kann eine zeitlich kontinuierliche Temperaturerhöhung durchgeführt werden oder können bei bestimmten Temperaturen definierte Haltezeiten bei jeweils einer oder mehrerer dieser Temperaturen, wie beispielsweise bei T1 oder T2 eingehalten werden.

Dabei wird ferner das Temperatur-Zeit-Profil bei allen Ausführungsformen bevorzugt so gewählt, dass eine strukturiert verteilte, bevorzugt eine gesteuerte Porosität entsteht, wobei bei diesem Temperatur-Zeit-Profil eine Temperaturanstiegs- oder Aufheizrate von 10 bis 200 K/min, vorzugsweise 20 bis 180 K/min und besonders bevorzugt von 50 bis 150 K/min verwendet wird, wobei bei der bevorzugten ersten Ausführungsform die Haltetemperatur zwischen 900°C und 1050°C und die Haltezeit zwischen 20 Minuten und 120 Minuten, bevorzugt zwischen 20 Minuten bis 60 Minuten oder sogar in Ausnahmefällen bis zu 150 Minuten beträgt. Die Haltetemperaturen können bei der zweiten bevorzugten Ausführungsform bei gleichen Haltezeiten zwischen mindestens 950 °C und höchstens 1200 °C gewählt werden. Bevorzugt beträgt die Haltetemperatur bei der zweiten bevorzugten Ausführungsform mindestens 1050 °C und höchstens 1150 °C.

Hierbei wird eine Verbindung eines zumindest teilweise kristallisierten Glases mit einem Einhausungsmaterial oder einem Dichtelement, vorzugsweise einem temperaturstabilen Einhausungsmaterial oder Dichtelement, besonders bevorzugt einem Metall, mit einem zumindest teilweise kristallisierten Glas, wie dies vorstehend beschrieben ist erhalten.

Die Verbindung ist hierbei fluiddicht, bevorzugt hermetisch dicht ausgebildet.

Die Erfinder haben dabei herausgefunden, dass höchst überraschend durch eine Kombination bestimmter Temperaturen und Haltezeiten bei einer Maximaltemperatur ein Poren umfassendes Gefüge erhalten wird, wobei die Poren insbesondere bei Verwendung eines gemäß vorstehender Beschreibung erhaltenen Formkörpers oder Sinterlings strukturiert verteilt angeordnet sind. In diesem Sinne wird auch von einer gesteuerten Porosität gesprochen. Die Haltezeit bei Maximaltemperatur beträgt zwischen 20 und 120 Minuten, bevorzugt 30 bis 60 Minuten, wobei Haltetemperaturen bei der ersten bevorzugten Ausführungsform zwischen mindestens 900°C und höchstens 1050°C gewählt werden. Bevorzugt beträgt die Haltetemperatur mindestens 950°C und höchstens 1010°C.

Die Haltetemperaturen können bei der zweiten bevorzugten Ausführungsform zwischen mindestens 950 °C und höchstens 1200 °C gewählt werden. Bevorzugt beträgt die Haltetemperatur bei der zweiten bevorzugten Ausführungsform mindestens 1050 °C und höchstens 1150 °C.

Bei Ausnahmefällen kann die Haltezeit für alle Ausführungsformen bis zu 150 Minuten betragen.

Ein weiterer Aspekt der vorliegenden Erfindung betrifft eine Verbindung eines zumindest teilweise kristallisierten Glases mit einem Einhausungsmaterial, vorzugsweise einem temperaturstabilen Einhausungsmaterial, besonders bevorzugt einem Metall, wobei die Verbindung ein zumindest teilweise kristallisiertes Glas gemäß Ausführungsformen der Erfindung umfasst.

Gemäß einer weiteren Ausgestaltung der Verbindung umfasst das Einhausungsmaterial insbesondere ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitische Stähle wie 1.4828 oder 1.4841 oder eine hochtemperaturstabile keramische Verbindung, beispielsweise eine Aluminiumoxid-basierte Keramik oder eine Zirkoniumoxid-basierte Keramik beispielsweise eine Keramik, welche Y-stabilisiertes Zirkoniumoxid umfasst.

Bevorzugt ist die Verbindung eines zumindest teilweise kristallisierten Glases mit einem Einhausungsmaterial so ausgebildet, dass im Bereich des Kontakts zwischen dem zumindest teilweise kristallisierten Glas und dem Einhausungsmaterial somit an der Grenzfläche zwischen dem zumindest teilweise kristallisierbaren Glas und dem Fügepartner eine geringere Anzahl von Poren vorliegt oder keine Poren vorliegen.

Die Porosität sinkt bevorzugt unterhalb eines Abstandes des zumindest teilweise kristallisierten Glases von der Grenzfläche zum Einhausungsmaterial und/oder der Oberfläche von 1 µm auf einen Wert von weniger als 10 %, bevorzugt auf weniger als 5 % ab und besonders bevorzugt auf weniger als 3% ab.

Besonders vorteilhaft ist dabei die Grenzfläche zwischen dem Einhausungsmaterial und dem zumindest teilweise kristallisierten Glas so ausgebildet, dass nahezu keine Fehlstellen an dieser Grenzfläche vorliegen, sondern vielmehr das Einhausungsmaterial gleichmäßig von dem zumindest teilweise kristallisierten Glas benetzt ist. Dies wird in vorteilhafter Weise dadurch erzielt, dass an der Grenzfläche selbst keine störenden Nebenreaktionen auftreten, insbesondere es zu keiner Kristallisation im Sinne einer heterogenen Kristallisation an der Grenzfläche erfolgt. Vielmehr erfolgt die Kristallisation des Ausgangsglases in einer Weise, dass diese im Glas selbst erfolgt und Grenzflächenreaktionen an der Grenze zum Einhausungsmaterial bislang nicht entdeckt werden konnten.

Die Grenzfläche zwischen dem Einhausungsmaterial und dem zumindest teilweise kristallisierten Glas ist weiterhin auch im Wesentlichen frei von Blasen oder Einschlüssen. Dies wird ebenfalls durch die besonders gute Benetzung erzielt.

Ein nochmals weiterer Aspekt der Erfindung betrifft ein Durchführungs- oder Verbindungselement, welches ein zumindest teilweise kristallisiertes Glas nach vorstehend beschriebenen Ausführungsformen umfasst.

Bevorzugt umfasst das Durchführungs- oder Verbindungselement wenigstens ein weiteres Material, wobei der Unterschied in den thermischen Ausdehnungskoeffizienten zwischen dem zumindest teilweise kristallisierten Glas und dem mindestens einem weiteren Material weniger als 3*10⁻⁶/K beträgt.

Auf diese Weise wird besonders vorteilhaft eine sehr hohe Stabilität des Durchführungs- oder Verbindungselements ermöglicht. So unterscheidet sich auch der thermische Ausdehnungskoeffizient der vom zumindest teilweise kristallisierten Glas umfassten Kristallphasen lediglich um höchstens +/- 4*10⁻⁶/K von dem thermischen Ausdehnungskoeffizienten des Grünglases. Besonders bevorzugt liegt der thermische Ausdehnungskoeffizient der Kristallphasen, welche von dem zumindest teilweise kristallisierten Glas umfasst sind, zwischen 5*10⁻⁶/K und 12*10⁻⁶/K.

Vorteilhaft ist bei den bevorzugten Ausführungsformen die Verbindung fluiddicht, bevorzugt hermetisch dicht ausgebildet.

Gemäß einem nochmals weiteren Aspekt der Erfindung ist dabei das mindestens eine weitere Material als temperaturstabiles Material ausgebildet, bevorzugt als temperaturstabiles Metall, insbesondere als temperaturstabile Keramik, insbesondere auch als Material einer Einhausung und/oder insbesondere als Material einer Einhausung eines Durchführungs- oder Verbindungselements.

Ein nochmals weiterer Aspekt der Erfindung betrifft ein Verfahren zu Herstellung einer Verbindung zwischen einem zumindest teilweise kristallisierten Glas und einem Einhausungsmaterial, insbesondere dem Einhausungsmaterial eines Durchführungs- oder Verbindungselements beispielsweise in Form einer Metall-Glas-Verbindung. Dieses Verfahren umfasst die folgenden Schritte:
1. Bringen eines gesinterten Grünglaskörpers oder Sinterkörpers zwischen die oder an das zu verbindende Material zumindest eines Fügepartners, insbesondere des Materials einer Einhausung oder eines Dichtungs- und Durchführungselements,
2. Erhitzen der Materialien, insbesondere des Materials des gesinterten Grünglaskörpers oder Sinterkörpers und des zu verbindenden Materials, insbesondere des Materials eines Fügepartners, insbesondere das Material der Einhausung oder des Dichtungs- und Durchführungselements, auf eine Temperatur T₁, sodass es zu einem Auffließen des gesinterten Grünglaskörpers kommt mit der Folge, dass die zu verbindenden Materialien, insbesondere das Material des Fügepartners und insbesondere das Material der Einhausung oder des Dichtungs- und Durchführungselements, von dem Grünglas benetzt werden, und eine formschlüssige Verbindung des Materials des Grünglaskörpers und des Materials des Fügepartners, insbesondere des Materials der Einhausung oder des Dichtungs- und Durchführungselements, vorliegt,
3. Erhitzen der formschlüssig verbundenen Materialien auf eine Temperatur T₂, welche größer ist als T₁, sodass es zu einer zumindest partiellen Kristallisation des Grünglases kommt, sodass ein zumindest teilweise kristallisiertes Glas vorliegt, welches Poren umfasst, wobei die Poren eine strukturierte Verteilung aufweisen.

Offenbart wird auch ein Sinterkörper, welcher der Ausbildung einer strukturiert verteilten Porosität, vorteilhaft und vorzugsweise einer gesteuerten Porosität, zugänglich ist. Er umfasst ein zumindest teilweise kristallisierbares Glas, wobei der Sinterkörper eine Dichte aufweist, welche zumindest 90% der theoretischen Dichte, bevorzugt mindestens 95% der theoretischen Dichte entspricht. Der Sinterkörper weist bei der ersten bevorzugten Ausführungsform, die folgende Zusammensetzung in Gew.-% auf:

| | |
|---|---|
| SiO₂: | 20 bis 60, bevorzugt 25 bis 50 |
| AL₂O₃: | 0,5 bis 20, bevorzugt 0,5 bis 10 |
| CaO: | 10 bis 50 |
| MgO: | 0,5 bis 50, bevorzugt 0,5 bis 10 |
| Y₂O₃: | 0,1 bis 20, bevorzugt 3 bis 20 |
| ZrO₂: | 0,1 bis 25, bevorzugt 3 bis 20 |
| B₂O₃: | 1 bis 15, bevorzugt 3 bis 12, |

wobei weiterhin HfO₂ optional bis zu 0,25 Gew.-% enthalten sein kann.

Der Sinterkörper nach einer zweiten Ausbildung umfasst bevorzugt, die folgende Zusammensetzung in Gew.-%:

| | | |
|---|---|---|
| SiO₂: | 36 bis 54, | bevorzugt 40 bis 54 |
| AL₂O₃: | 8 bis 16, | bevorzugt 8 bis 13 |
| CaO: | 0 bis 35, | bevorzugt 5 bis 25 |
| MgO: | 0 bis 17, | bevorzugt 3 bis 14 |
| RO: | 8 bis 39, | bevorzugt 8 bis 35 |
| ZrO₂: | 0 bis 25, | bevorzugt 0 bis 17 |
| B₂O₃: | 0 bis 3, | bevorzugt 0 bis 2, besonders bevorzugt 0 |

wobei der Anteil RO die Oxide BaO, SrO, MgO, ZnO jeweils einzeln oder in Summe oder in beliebigen Mischungen bezeichnet.

Bevorzugt beträgt RO einzeln oder in jeder beliebigen Kombination in Gew.%:

| | |
|---|---|
| BaO | 0 - 36 |
| MgO | 0 - 22 |
| CaO | 0 - 25. |

Generell kann der Sinterkörper bei besonders bevorzugten Ausführungsformen ein zumindest teilweise kristallisierbares Glas umfassen, wie dieses vorliegend offenbart und insbesondere in den Ansprüchen beansprucht ist, umfassen.

### Beispiel

Im Folgenden ist die Erfindung anhand eines Beispiels erläutert.

Ein beispielhaftes zumindest teilweise kristallisierbares Glas, mit welchem ein zumindest teilweise kristallisiertes Glas gemäß der Erfindung erhalten werden kann, ist bei der ersten bevorzugten Ausführungsform durch folgende Zusammensetzung in Gew.-% gegeben:

| | |
|---|---|
| SiO₂ | 35,8 |
| B₂O₃ | 8,6 |
| Al₂O₃ | 2,4 |
| CaO | 30,3 |
| MgO | 3,8 |
| Y₂O₃ | 11,7 |
| ZrO₂ | 7,4. |

Ein beispielhaftes zumindest teilweise kristallisierbares Glas, mit welchem ein zumindest teilweise kristallisiertes Glas gemäß den zweiten bevorzugten Ausführungsformen der Erfindung erhalten werden kann, ist durch folgende Zusammensetzung für ein erstes zumindest teilweise kristallisierbares Glas G1 der zweiten bevorzugten Ausführungsform und ein zweites zumindest teilweise kristallisierbares Glas G2 der zweiten bevorzugten Ausführungsform in Gew.-% gegeben:

| **Oxide** | **G1, Gew%** | **G2, Gew%** |
|---|---|---|
| **SiO2** | 40,8 | 45 |
| **Al2O3** | 12,7 | 11,3 |
| **MgO** | 11,5 | 7,5 |
| **CaO** | 10,5 | 18,7 |
| **ZrO2** | 24,5 | 17,5 |

Ein beispielhaftes zumindest teilweise kristallisierbares Glas, mit welchem ein zumindest teilweise kristallisiertes Glas gemäß den zweiten bevorzugten Ausführungsformen der Erfindung erhalten werden kann, ist durch folgende Zusammensetzung für ein drittes erfindungsgemäßes zumindest teilweise kristallisierbares Glas G7 und ein viertes erfindungsgemäßes zumindest teilweise kristallisierbares Glas G8 der jeweils zweiten bevorzugten Ausführungsform in Gew.-% wie folgt gegeben:
Zumindest teilweise kristallisierbares Glas G7 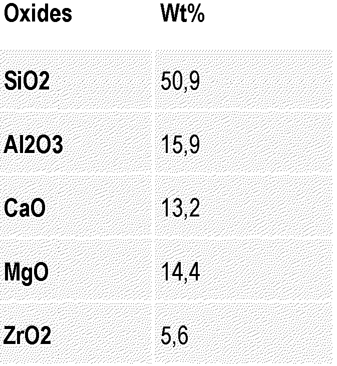 und
Zumindest teilweise kristallisierbares Glas G8

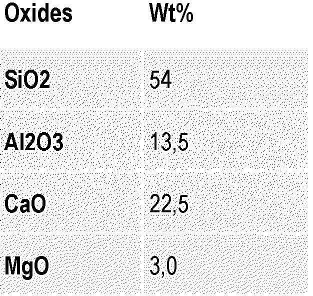

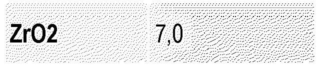

### Zeichnungen

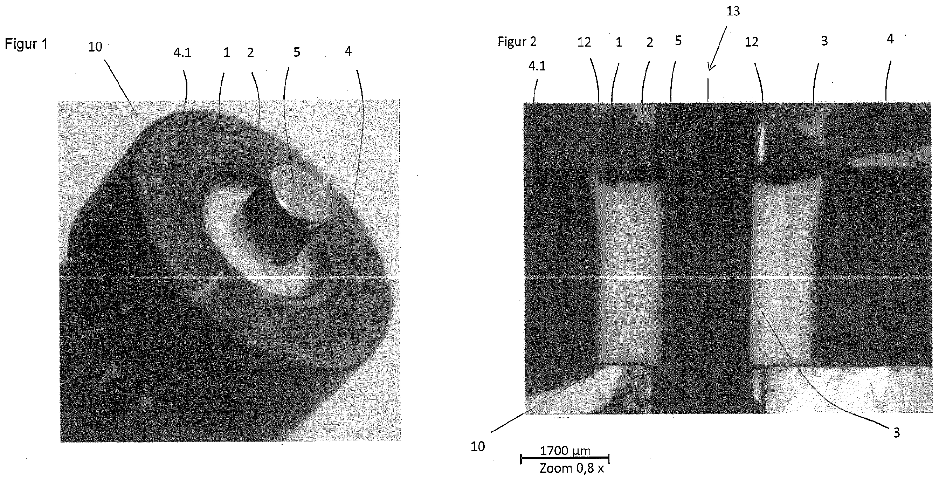

Im Folgenden wird die Erfindung anhand von Zeichnungen beispielhaft erläutert. Es zeigen
- Figur 1: eine photographische Aufnahme eines Durchführungs- oder Verbindungselements umfassend eine Metall umfassende Einhausung sowie ein in dieser, insbesondere als Sinter-Vorform angeordneten Sinterkörper nach dessen Temperaturbehandlung, bei welcher der geschmolzene Sinterkörper das zumindest teilweise kristallisierbare Glas der zweiten bevorzugten Ausführungsform umfasst und durch die Temperaturbehandlung an der Einhausung angeglast ist,
- Figur 2: eine photographische Aufnahme einer Querschnittsansicht des in Figur 1 gezeigten Durchführungs- oder Verbindungselements, welche eine Schnittebene zeigt, die in etwa parallel zu dessen Symmetrie- oder Längsachse verläuft und dabei in einer Ebene verläuft, in welcher auch diese Symmetrie- oder Längsachse liegt,

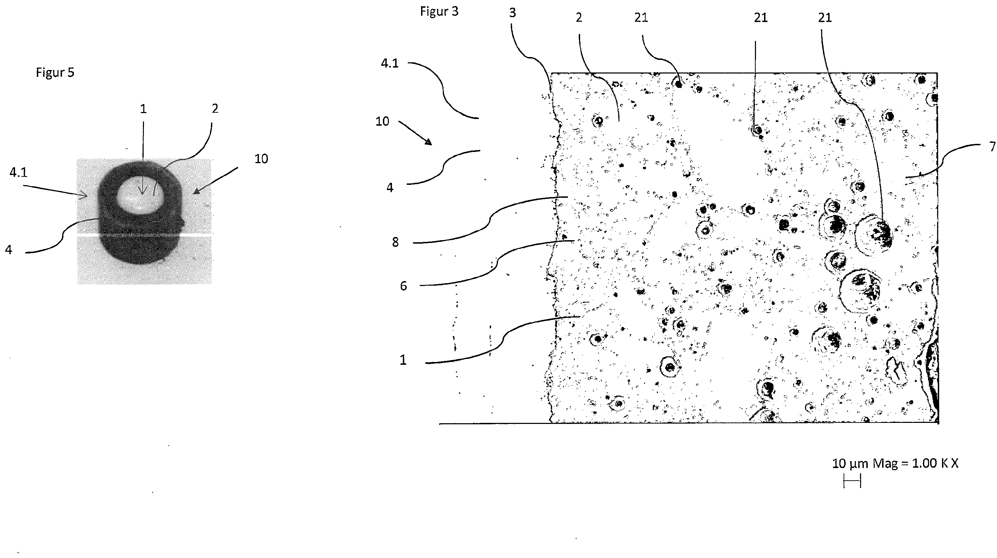

- Figur 3: eine etwa tausendfach vergrößerte elektronenmikroskopische Aufnahme eines Details im Bereich der Querschnittsansicht des in Figur 2 gezeigten Durchführungs- oder Verbindungselements, welche die Grenzfläche zwischen dem zumindest teilweise kristallisierenden Glas und dem Material der Einhausung erkennen lässt,

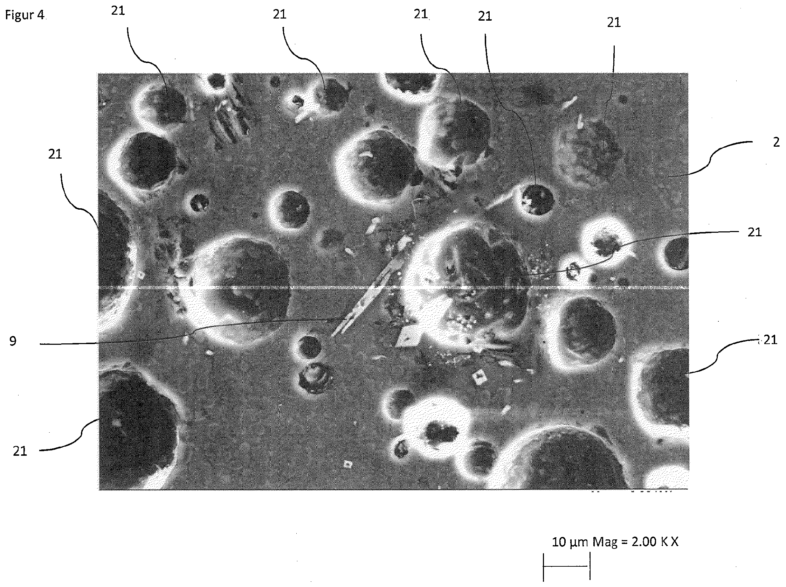

- Figur 4: eine etwa zweitausendfach vergrößerte elektronenmikroskopische Aufnahme eines Details im Bereich der Querschnittsansicht des in Figur 2 gezeigten Durchführungs- oder Verbindungselements, welche die Größe der Poren in dem zumindest teilweise kristallisierten Glas erkennen lässt. Diese Aufnahme zeigt das Glas nach einer Temperaturbeanspruchung bei 1200 °C für mehr als 10 Minuten,
- Figur 5: eine photographische Aufnahme einer Prüfungsanordnung umfassend eine Metall umfassende Einhausung sowie ein in dieser, insbesondere als Sinter-Vorform angeordneten Sinterkörper nach dessen Temperaturbehandlung, bei welcher der geschmolzene Sinterkörper das zumindest teilweise kristallisierbare Glas einer zweiten bevorzugten Ausführungsform umfasst und durch die Temperaturbehandlung an der Einhausung angeglast ist,

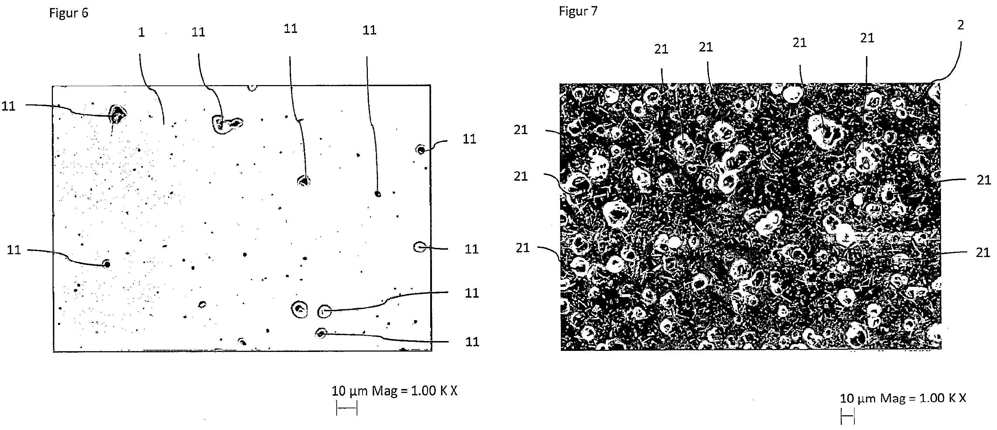

- Figur 6: eine elektronenmikroskopische Aufnahme einer Querschnittsansicht eines Sinterkörpers oder Sinterlings nach dessen Sinterung in etwa tausendfacher Vergrößerung, bei welcher die im Sinterkörper oder Sinterling verbliebenen Poren oder Fehlstellen zu erkennen sind,
- Figur 7: eine elektronenmikroskopische Aufnahme einer Querschnittsansicht des zumindest teilweise kristallisierenden Glases, welches einem aus dem in Figur 6 dargestellten Sinterkörpers oder Sinterlings ähnlichen durch thermische Behandlung und insbesondere zumindest teilweise Kristallisation hervorgegangen ist, in tausendfacher Vergrößerung, bei welcher die im Sinterkörper oder Sinterling gleichzeitig mit der Kristallisation entstandene Poren zu erkennen sind,

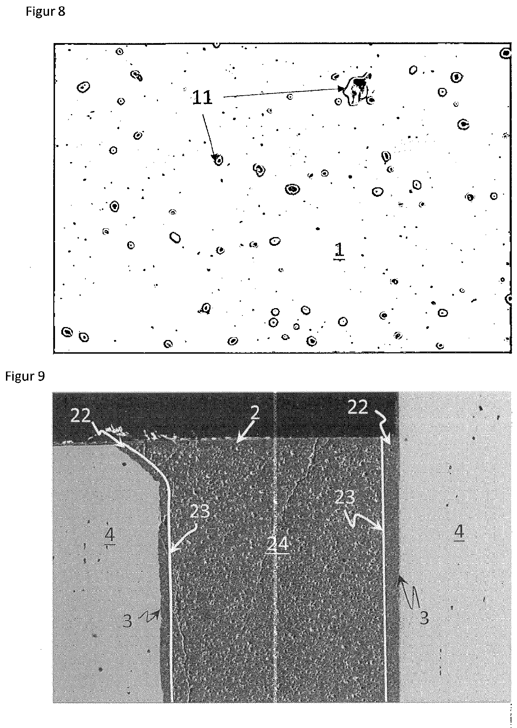

- Figur 8: eine elektronenmikroskopische Aufnahme eines Sinterkörpers aus einem zumindest teilweise kristallisierbaren Glas,
- Figur 9: eine elektronenmikroskopische Aufnahme eines zumindest teilweise kristallisierten Glases zwischen zwei Einhausungsmaterialien,

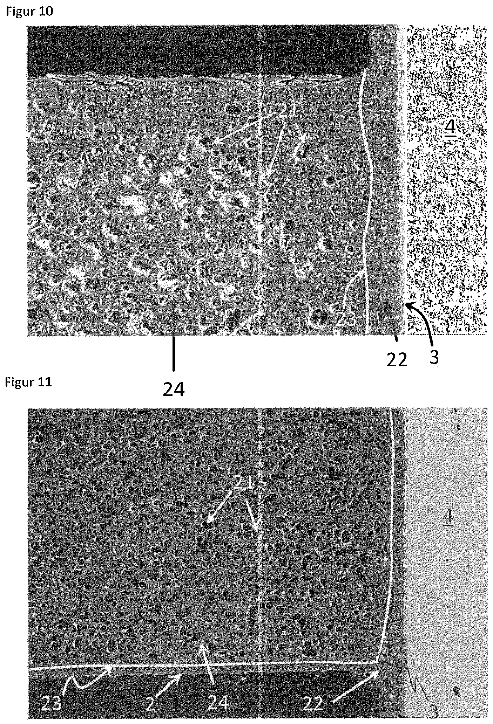

- Figur 10: eine vergrößerte Darstellung der Grenzfläche zwischen zumindest teilweise kristallisiertem Glas und Einhausungsmaterial aus einer Ausführungsform mit gleichem Material,

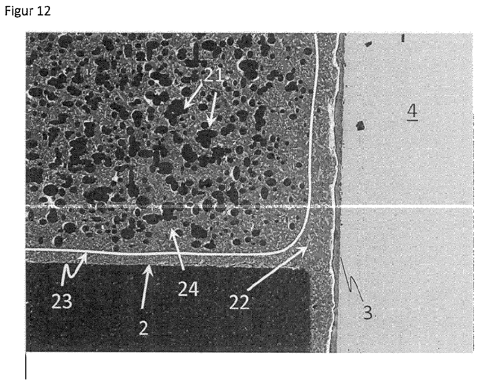

- Figur 11 und 12: elektronenmikroskopische Aufnahmen jeweils eines zumindest teilweise kristallisierten Glases bei unterschiedlichen Haltetemperaturen.

### Detaillierte Beschreibung der bevorzugten Ausführungsformen

Nachfolgend wird auf bevorzugte Ausführungsformen Bezug genommen, welche in ihren Eigenschaften detaillierter beschrieben werden.

Ein Ziel der Erfindung ist es, hermetisch dichte und dabei mechanisch stabile Verbindungen zwischen einem zumindest teilweise kristallisierbarem oder teilweise kristallisierten Glas und einem Metall oder Einhausungsmaterial, insbesondere eines Durchführungs- oder Verbindungselements bereitzustellen. Diese Durchführungs- oder Verbindungselemente bleiben zumindest bei der zweiten bevorzugten Ausführungsform vorzugsweise bis über 1000 °C, bevorzugt bis 1250 °C im Wesentlichen hermetisch dicht und insbesondere mechanisch stabil und können hierdurch im Wesentlichen dauerbetriebsfest auch in Abgasanlagen von Kraftfahrzeugen, insbesondere auch deren Abgasreinigungsanlagen eingesetzt werden. Die Erfinder haben sogar Beispiele der zweiten bevorzugten Ausführungsform erhalten können, bei welchen die hier beschriebenen Verbindungen sowie Durchführungs- und Verbindungsemente Temperaturen von bis zu 1270 °C im Wesentlichen hermetisch dicht und mechanisch stabil dauerbetriebsfest standhielten.

Ein Maß für diese Eigenschaften ist beispielsweise die Halbkugeltemperatur, diese beträgt bei den hier offenbarten, zumindest teilweise kristallisierten Gläser der zweiten bevorzugten Ausführungsform bevorzugt mindestens rund 1200 °C und liegt bei einigen Exemplaren der bevorzugten zweiten Ausführungsform sogar deutlich höher.

Das Material der ersten bevorzugten Ausführungsform ist nur bis etwa 1050 °C temperaturbeständig und hermetisch dicht. Für spezielle Anwendungen sind jedoch etwa 1200 °C oder sogar höhere Temperaturen erforderlich.

Neben den bereits vorstehend beschriebenen Vorteilen beruht ein Unterschied der zweiten bevorzugten Ausführungsform gegenüber der ersten bevorzugten Ausführungsform, welcher zu der verbesserten Temperaturbeständigkeit beiträgt, auf den Yttrium-freien, insbesondere Y₂O₃-freien Kristallphasen. Ferner können diese Kristallphasen bevorzugt auch Zirkon-frei, insbesondere ZrO₂-frei sein.

Das hier offenbarte zumindest teilweise kristallisierbare Glas der zweiten bevorzugten Ausführungsform kann B₂O₃-frei sein bzw. weist vorzugsweise nur sehr geringe B₂O₃-Anteile von weniger als 1 Gew.% auf und ist damit chemisch beständiger als das Glas der ersten bevorzugten Ausführungsform.

Nachfolgend wird auf die beigeschlossenen Figuren und zunächst auf Figur 1 Bezug genommen. Diese zeigt eine photographische Aufnahme eines Durchführungs- oder Verbindungselements 10 mit einer vorzugsweise ein Metall umfassenden Einhausung 4.1 sowie einen in dieser, insbesondere als Sinter-Vorform angeordneten Sinterkörper 1, welcher das zumindest teilweise kristallisierte Glas 2 umfasst oder aus diesem besteht, nach dessen vorstehend beschriebener Temperaturbehandlung zur Herstellung eines Durchführungs- oder Verbindungselements 10.

Bei dieser Temperaturbehandlung, wurde der geschmolzene Sinterkörper 1 an der Einhausung 4.1 angeglast und haben sich gleichzeitig mit der Kristallisation Poren 21 ausgebildet, welche nachfolgend unter Bezugnahme auf weitere Figuren noch detaillierter beschrieben werden.

Ferner ist ein Funktionselement 5 zu erkennen, welches beispielsweise einen elektrischen Leiter umfassen kann.

Generell werden im Rahmen der vorliegenden Offenbarung als Fügepartner jeweils bevorzugt Funktionselemente und/oder Einhausungen oder Materialien von Einhausungen, insbesondere auch wie diese vorliegend beschrieben werden, und Dichtelemente oder Materialien von Dichtelementen angegeben.

Figur 2 ist eine photographische Aufnahme einer Querschnittsansicht des in Figur 1 gezeigten, im Wesentlichen zylinderförmigen und zylindersymmetrischen Durchführungs- oder Verbindungselements 10 zu entnehmen, welche eine Schnittebene zeigt, die in etwa parallel zu dessen Symmetrie- oder Längsachse 13 verläuft und dabei in einer Ebene verläuft, in welcher auch diese Symmetrie- oder Längsachse 13 liegt.

Diese Aufnahme der Figur 2 sowie der Figuren 3, 4, 5 und 6 wurde erhalten, nachdem die jeweiligen Probenkörper, insbesondere Durchführungs- oder Verbindungselemente 10 oder das zumindest teilweise kristallisierbare Glas 2 beispielsweise in deren Mitte durch Sägen mit einer Feinsäge und anschließendes Polieren getrennt wurden.

Das Durchführungs- oder Verbindungselement 10 umfasst dabei jeweils eine Verbindung 12 des zumindest teilweise kristallisierten Glases mit dem Funktionselement 5 und dem Einhausungsmaterial 4 der Einhausung 4.1.

Dabei stellen das Funktionselement 5 und das Einhausungsmaterial 4 der Einhausung 4.1 jeweils zumindest einen Fügepartner mit jeweils einer Grenzfläche 3 zwischen dem zumindest teilweise kristallisierten Glas 2 und dem zumindest einen Fügepartner 4, 5 bereit.

Soweit im Rahmen der vorliegenden Offenbarung vom Material der Einhausung oder vom Einhausungsmaterial gesprochen wird, offenbaren diese beiden Begriffe den gleichen Sachverhalt.

Wie nachfolgend noch detaillierter beschrieben werden wird, weist das zumindest teilweise kristallisierbare Glas eine Porosität auf, die zur jeweiligen Grenzfläche 3 des zumindest teilweise kristallisierten Glases 2 mit dem jeweiligen Fügepartner 4, 5 hin abnimmt.

Die Verbindung 12 umfasst jeweils eine Grenzfläche 3 zwischen dem zumindest teilweise kristallisierten Glas 2 und dem jeweils zumindest einen Fügepartner 4, 5, wobei das zumindest teilweise kristallisierte Glas 2 zumindest eine Kristallphase 6 sowie Poren 21 umfasst, welche in dem zumindest teilweise kristallisierten Glas 2 strukturiert verteilt angeordnet sind und beispielsweise Figur 3 zu entnehmen sind, in welcher auch die Kristallphase 6 als kristalliner Bereich, auch an deren kristallförmigen Strukturen gut zu erkennen ist.

Hierbei findet man, insbesondere durch Ausmessen, dass in dem zumindest teilweise kristallisiertes Glas 2 die jeweiligen Kristallite eine Größe zwischen 0,1 µm bis 50 µm aufweisen. Beispielhaft sind die Kristallite 7 und 8 mit Bezugszeichen versehen. Als Größe eines Kristalliten 7, 8 wird hierbei die größte räumliche Erstreckung des Kristalliten 7, 8 in irgendeine Raumrichtung bezeichnet. So werden beispielsweise nadelförmige Kristalliten durch deren längste Hauptachse in deren Größe bestimmt.

Figur 3 zeigt eine etwa tausendfach vergrößerte elektronenmikroskopische Aufnahme eines Details im Bereich der Querschnittsansicht des in Figur 2 gezeigten Durchführungs- oder Verbindungselements 10, welche die Grenzfläche 3 zwischen dem zumindest teilweise kristallisierenden Glas 2 und dem Material der Einhausung 4.1 gut erkennen lässt.

Es ist in Figur 3 ebenfalls an der Dichte der Poren 21 zu erkennen, dass die Porosität im Bereich der Grenzfläche 3 stark abnimmt und an der Grenzfläche 3 sogar im Wesentlichen keine Poren 21 vorliegen.

Die Porosität weist dabei einen Gradienten auf und die Porosität beträgt in einem Abstand von weniger als 10 µm, insbesondere auch in einem Abstand von weniger als 20 µm zur Grenzfläche 3 des zumindest teilweise kristallisierten Glases 2 weniger als 10 %, und beträgt insbesondere in der Darstellung der Figur 3 sogar weniger als 5 % und darüber hinaus sogar weniger als 3 %. Hierbei ist gut auch erkennbar, dass die Porosität zur Grenzfläche 3 des zumindest teilweise kristallisierten Glases 2 mit dem Fügepartner 4.4, 4 hin abnimmt. In Figur 3 ist deren Legende ein Maßstab zu entnehmen, welcher die Länge von 10 µm aufweist und somit die Längen von 10 µm und 20 µm erkennbar werden lässt.

Figur 3 ist eine weitere vorteilhafte Eigenschaft der Verbindung 12 sowie des Durchführungs- und Verbindungselements zu entnehmen, insbesondere dass an der Grenzfläche 3 zwischen dem zumindest teilweise kristallisierten Glas 2 und dem Fügepartner 4.1, 4 eine geringere Anzahl von Poren 21 vorliegt oder keine Poren 21 vorliegen, wobei die Porosität unterhalb eines Abstands des zumindest teilweise kristallisierten Glases 2 oder im zumindest teilweise kristallisierenden Glas von der Grenzfläche 3 zum Fügepartner 4.1, von 1 µm, und auch von 2 µm auf einen Wert von weniger als 5 % absinkt.

Figur 3 ist auch zu entnehmen, dass die Porosität einen Gradienten aufweist und die Porosität von der Grenzfläche 3 und/oder der Oberfläche des zumindest teilweise kristallisierten Glases 2 zu dessen Innerem hin zunimmt und insbesondere auf einen Maximalwert ansteigt oder diesem zustrebt. Dieser Maximalwert der Porosität kann 20 % oder mehr betragen.

Nachfolgend wird auf Figur 4 Bezug genommen, die eine etwa zweitausendfach vergrößerte elektronenmikroskopische Aufnahme eines Details im Bereich der Querschnittsansicht des in Figur 2 gezeigten Durchführungs- oder Verbindungselements 10 zeigt, welche die Größe der Poren 21 in dem zumindest teilweise kristallisierten Glas erkennen lässt. Hierzu trägt auch Figur 4 eine Legende, die das Längenmaß von 10 µm wiedergibt.

Es ist zu erkennen, dass in dem zumindest teilweise kristallisierten Glas die Größe der Poren zwischen 2 µm und 30 µm, und somit auch zwischen 5 µm und 25 µm liegt, welches auch durch entsprechende Messungen bestätigt wird.

Als Größe der Pore 21 wir jeweils deren größte Längenausdehnung in irgendeiner Raumrichtung definiert, welches angenähert auch einem Durchmesser der jeweiligen Pore 21 entspricht, da diese im Wesentlichen sphärische Gestalt aufweist.

Figur 4 ist auch zu entnehmen, dass die Poren 21 zumindest teilweise in der Nähe von Kristallen oder Kristalliten 9 angeordnet sind. Hierbei wird der Begriff des Kristalls und des Kristalliten im Rahmen der vorliegenden Offenbarung jeweils synonym gebraucht.

Bei dem in den vorliegenden Figuren dargestellten teilweise kristallisierten Glas 2 beträgt der Kristallgehalt mindestens 25 %, bezogen auf das gesamte Volumen des zumindest teilweise kristallisierten Glases 2 und beträgt sogar bei bestimmten Ausführungsformen mindestens 50 % und beträgt bei besonders bevorzugt Ausführungsformen sogar mindestens 60 %. Der Kristallgehalt lässt sich durch die Haltezeit bei der jeweils offenbarten Haltetemperatur entsprechend einstellen.

Bezogen auf das Volumen, insbesondere das gesamte Volumen des zumindest teilweise kristallisierbaren Glases beträgt die Porosität mindestens 3 %. Auch die Haltezeit lässt sich durch die Haltezeit bei der jeweiligen Haltetemperaturen entsprechend einstellen. Bevorzugt beträgt diese Porosität mindestens 5 %, besonders bevorzugt mindestens 10 % des gesamten Volumens des zumindest teilweise kristallisierbaren Glases 2.

Die insbesondere in den Figuren 2 und 3 dargestellte Verbindung 12 des Durchführungs- oder Verbindungselements 10 ist fluiddicht und sogar im Wesentlichen vollständig hermetisch dicht ausgebildet.

Bei dem Durchführungs- oder Verbindungselement 10 ist das Material des Fügepartners, insbesondere das Material 4 der Einhausung 4.1 , als temperaturstabiles Material ausgebildet, und ist bevorzugt als temperaturstabiles Metall oder als temperaturstabile Keramik ausgebildet oder umfasst diese.

Das Material des Fügepartners, somit das Einhausungsmaterial 4 der Einhausung 4.1 oder das Material des Funktionselements 5 umfasst insbesondere ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitische Stähle wie 1.4828 oder 1.4841 oder eine hochtemperaturstabile keramische Verbindung, beispielsweise eine Aluminiumoxid-basierte Keramik oder eine Zirkoniumoxid-basierte Keramik beispielsweise eine Keramik, welche Y-stabilisiertes Zirkoniumoxid umfasst.

Besonders vorteilhaft ist ein Fügepartner mit wenigstens einem Material, beispielsweise dem Einhausungsmaterial 4 der Einhausung 4.1 und/oder insbesondere wenigstens einem weiteren Material, beispielsweise dem Material des Funktionselements 5, bei welchen der Unterschied in den thermischen Ausdehnungskoeffizienten zwischen dem zumindest teilweise kristallisierten Glases 2 und dem Material des Fügepartners 4.4, 5, als 3*10⁻⁶/K beträgt.

Die vorstehenden detaillierten Erläuterungen des zumindest teilweise kristallisierbaren Glases 2 der zweiten bevorzugten Ausführungsform gelten in gleicher Weise, bis auf die jeweils angegebenen Temperaturen der thermischen Prozesse sowie der Temperaturstabilität und die Haltezeiten auch für die erste bevorzugte Ausführungsform der zumindest teilweise kristallisierbaren Glases.

Eine besonders vorteilhafte Eigenschaft des zumindest teilweise kristallisierte Glases 2 liegt darin, dass dieses zumindest eine Kristallphase 6 sowie Poren 21, welche in dem zumindest teilweise kristallisierten Glas 2 strukturiert verteilt angeordnet sind, umfasst.

Die verbesserten thermischen Eigenschaften des zumindest teilweise kristallisierbaren Glases 2 sowie einer Verbindung 12 oder eines Durchführungs- oder Verbindungselements 10, welche dieses zumindest teilweise kristallisierbare Glas 2 umfassen, können beispielsweise mittels erhitzungsmikroskopischer Verfahren bestimmt werden.

Bei der Erhitzungsmikroskopie wird eine im Bildfeld eines Erhitzungsmikroskops liegende Probe definierten thermischen Bedingungen ausgesetzt und kann dabei temperaturabhängig betrachtet sowie bildgebend aufgezeichnet werden.

Vorteilhaft werden bei diesen Verfahren Temperaturveränderungen so langsam vorgenommen, dass sich die betrachtete Probe stets in deren thermischem Gleichgewicht befindet.

Eine hermetische Verbindung beispielsweise eines zumindest teilweise kristallisierenden oder auch schon teilweise kristallisierten Glases 2 mit beispielsweise einem Metall wird üblicherweise etwa auf der Ebene der sogenannten Sphärischtemperatur des Glases gewählt oder kann üblicherweise um ca. ± 80 Kelvin, bevorzugt ± 20 Kelvin (oder somit ± 20 °C) davon abweichen.

Diese Sphärischtemperatur kann in einem erhitzungsmikroskopischen Verfahren bestimmt werden.

Diese markiert die Temperatur, bei der eine anfänglich zylindrische Probe, vorliegend in typischer Weise der Sinterkörper 1 oder Sinterling 1, welcher in dieser Anordnung auch als Sinter-Vorform oder Formkörper bezeichnet wird, da dieser zur Herstellung einer Verbindung 12, insbesondere in einem Durchführungs- oder Verbindungselement 10 bestimmt ist, in eine sphärische Masse verschmolzen wird.

**Die Sphärischtemperatur** kann dabei in typischer Weise bei einer Viskosität von etwa logη = 5,4 gefunden werden.

Die Symbole in der nachfolgenden Tabelle 1 haben folgende Bedeutungen:
T_{EW}- Der Erweichungspunkt des zumindest teilweise kristallisierenden Glases, ab welchem eine Benetzung, beispielsweise eines Metalls einer Verbindung oder eines Materials einer Einhausung eines Durchführungs- oder Verbindungselements stattfindet.
Tₛₚₕ - Die Sphärischtemperatur, welche die Temperaturobergrenze für die Hermetizität sowie mechanischen Beständigkeit einer Verbindung des zumindest teilweise kristallisierenden Glases mit einem Metall einer Verbindung oder eines Materials einer Einhausung eines Durchführungs- oder Verbindungselements angibt.
Tₕₛₚₕ - Die Halbkugeltemperatur, welche wie vorstehend bereits erwähnt die Temperatur angibt, bei welcher das zumindest teilweise kristallisierbare oder zumindest teilweise kristallisierte Glas an einem Metall anschmilzt, insbesondere bei einem Durchführungs- oder Verbindungselement an dessen Einhausung anglast.
T_{fließ} - Der Fließtemperatur, bei welcher ein Auffließen des zumindest teilweise kristallisierenden Glases stattfindet und dieses zu fließen beginnt, beispielsweise innerhalb einer Verbindung mit einem Metall einer Verbindung den dichten, insbesondere hermetisch dichten Kontakt verliert, welches zu einem irreversiblen Verlust der dichtenden Eigenschaften führt.

Die nachfolgende Tabelle 1 zeigt beispielhafte Zusammensetzungen von zwei erfindungsgemäßen Beispielen der zweiten bevorzugten Ausführungsform, Beispiel 1, welches in Tabelle 1 und 2 auch als G1 bezeichnet wird, und Beispiel 2, welches in Tabelle 1 und 2 auch als Beispiel G2 bezeichnet wird, sowie Angaben zu deren thermischen Eigenschaften.

**Tabelle 1**

| **Oxide** | **G1, Gew%** | **G2, Gew%** | **Erste Ausführ.** |
|---|---|---|---|
| **SiO2** | 40,8 | 45 | |
| **Al2O3** | 12,7 | 11,3 | |
| **MgO** | 11,5 | 7,5 | |
| **CaO** | 10,5 | 18,8 | |
| **ZrO2** | 24,5 | 17,5 | |

| **Thermische Eigenschaften** | | | |
|---|---|---|---|
| **T_{EW}** | 966⁰C | 975⁰C | 854°C |
| **Tₛₚₕ** | 1030⁰C | 1040⁰C | 898°C |
| **Tₕₛₚₕ** | 1248⁰C | 1263⁰C | 1117°C |
| Tfließ | 1254⁰C | 1267⁰C | 1125°C |

Die dritte Spalte in der vorstehenden Tabelle offenbart die thermischen Werte der ersten bevorzugten Ausführungsform .

### Beispiele 1 und 2

Hierbei wurden für die Herstellung der Verbindung des zumindest teilweise kristallisierbaren Glases 2 mit dem Metall einer Verbindung 12, insbesondere dem Metall einer Einhausung 4.1 eines Durchführungs- oder Verbindungselements 10, welches auch als Einglasungsprozess bezeichnet wird, das nachfolgende Temperatur-Zeit-Profil insbesondere als Temperatur-ZeitProgramm zur Durchführung der jeweiligen thermischen Behandlung verwendet.

### Temperatur-Zeit-Profil

Ein wie vorstehend beschrieben erhaltener Sinterkörper 1 wurde in das Einhausungsmaterial 4 eines Durchführungs- oder Verbindungselements 10 als Sinter-Vorform eingesetzt und zusammen mit dem Einhausungsmaterial von Raumtemperatur (RT) bis zu einer Temperatur von 1040 ⁰C mit etwa 10 K/min erhitzt.

Beispielhaft ist dieses Durchführungs- oder Verbindungselement der Figur 5 zu entnehmen, welche eine photographische Aufnahme einer Prüfungsanordnung umfassend eine Metall umfassende Einhausung 4.1 sowie ein in dieser, insbesondere als Sinter-Vorform angeordneten Sinterkörper 1 nach dessen Temperaturbehandlung, bei welcher der geschmolzene Sinterkörper 1 das zumindest teilweise kristallisierbare Glas 2 der zweiten bevorzugten Ausführungsform umfasst und durch die Temperaturbehandlung an der Einhausung 4.1 angeglast ist. Es ist dabei für die vorliegenden thermischen Messungen oder Prüfungen im Wesentlichen unerheblich, dass das in Figur 5 dargestellte Verbindungs- oder Durchführungselement 10 nicht über ein Funktionselement 5 verfügt.

Bei Erreichen einer Temperatur von 1040°C wurde diese Temperatur für 15 Minuten bis 60 Minuten gehalten, welches die Haltezeit dieses Verfahrensschritts für das Einglasen wiedergibt.

Danach wurde die Temperatur von 1040°C bis zur Raumtemperatur (RT) mit etwa 10 K/min abgesenkt. Raumtemperatur bezeichnet hierbei eine Temperatur von ca. 20°C.

Dieses Temperatur-Zeit-Profil oder -Programm kann auch bei den vorstehend beschriebenen und insbesondere in den Ansprüchen erfassten Verfahren zur Herstellung einer Verbindung sowie zur Herstellung eines Durchführungs- und Verbindungselements in gleicher Weise Anwendung finden, insbesondere zur Erzeugung einer gesteuerten Porosität. Hierbei ist es jedoch vorteilhaft, wenn auch diejenigen Bestandteile, an welchen dann das zumindest teilweise kristallisierbare oder zumindest teilweise kristallisierte Glas anschmilzt, somit anglast, dem gleichen Temperaturverlauf oder dem zumindest im Wesentlichen gleichen Temperaturverlauf ausgesetzt sind.

### Überprüfung der Temperaturbeständigkeit

Die Überprüfung der Temperaturbeständigkeit, insbesondere die Überprüfung der Hochtemperaturbeständigkeit wurde nach Durchführung des vorstehenden Temperatur-Zeit-Profils wie folgt vorgenommen.

Das zumindest teilweise kristallisierbare oder zumindest teilweise kristallisierte Glas 2 wurde von Raumtemperatur, RT, bis 1200°C mit einer Temperaturanstiegsrate oder Aufheizrate von 10 K/min aufgeheizt.

Danach wurde bei 1200°C eine Haltezeit von 10 Minuten aufrecht erhalten und danach fand eine Abschrecken zurück zu Raumtemperatur, RT, statt. Das Abschrecken fand durch eine Abkühlung bei Raumtemperatur ohne zusätzliche Kühlungs- oder Erhitzungsmaßnahmen statt.

Hierbei ergaben sich für die vorstehend beschriebenen erfindungsgemäßen zumindest teilweise kristallisierbaren Gläser die folgenden, in Tabelle 2 dargestellten Ergebnisse.

**Tabelle 2**

| **Beispiele** | **Mechanisch stabile Dichtung** | **Hochtemperaturbeständigkeit** |
|---|---|---|
| **G1** | O | O |
| **G2** | O | O |

| | | |
|---|---|---|
| O - Bestanden X - Nicht bestanden | | |

Die erfindungsgemäßen Beispiele 1 und 2 weisen somit selbst nach deren Temperaturbeständigkeitsprüfung noch eine mechanisch stabile Dichtung sowie die gewünschte Hochtemperaturbeständigkeit auf.

Die Erfinder haben weitere Gläser untersucht, welche jedoch nicht die geforderten Eigenschaften zeigen konnten. Dies sind die Beispiele G3 bis G6 der Tabelle 3.

### Gegenbeispiele

**Tabelle 3**

| **Oxide in Gew%** | **G3, Gew%** | **G4, Gew%** | **G5, Gew%** | **G6, Gew%** |
|---|---|---|---|---|
| **SiO2** | 50,5 | 50,1 | 51,9 | 49,3 |
| **Al2O3** | 9,3 | 9,2 | 13,0 | 9,1 |
| **MgO** | 21,3 | 21,1 | 3,0 | 20,7 |
| **CaO** | 13,9 | 13,9 | 21,6 | 13,7 |
| **ZrO2** | 2,7 | 2,6 | 7,0 | 2,6 |
| **B2O3** | 2,3 | 3,0 | 3,5 | 4,6 |

| | **Thermische Eigenschaften** | | | |
|---|---|---|---|---|
| **T_{EW}** | 862⁰C | 903⁰C | 970⁰C | 892⁰C |
| **Tₛₚₕ** | X | X | 1033⁰C | 930⁰C |
| **Tₕₛₚₕ** | 1249⁰C | 1243⁰C | 1145⁰C | 1200⁰C |
| **T_{fließ}** | 1260⁰C | 1250⁰C | 1200⁰C | 1220⁰C |

### Temperatur-Zeit-Profil

Ein auch für die Gegenbeispiele G3 bis G6 wie vorstehend beschrieben erhaltener Sinterkörper wurde in das Einhausungsmaterial eines Durchführungs- oder Verbindungselement als Sinter-Vorform bzw. Formkörper eingesetzt und zusammen mit dem Einhausungsmaterial von Raumtemperatur (RT) bis zu einer Temperatur von 1040 ⁰C mit etwa 10 K/min erhitzt.

Bei Erreichen einer Temperatur von 1040°C wurde diese Temperatur für 15 Minuten bis 60 Minuten gehalten, welches die Haltezeit dieses Verfahrensschritts wiedergibt.

Danach wurde die Temperatur von 1040°C bis zur Raumtemperatur (RT) mit etwa 10 K/min abgesenkt. Raumtemperatur bezeichnet hierbei eine Temperatur von ca. 20°C, welches einer Abkühlung bei Raumtemperatur ohne zusätzliche Kühlungs- oder Erhitzungsmaßnahmen entsprach.

Auch die Überprüfung der Temperaturbeständigkeit wurde bei den Gegenbeispielen G3 bis G6 wie vorstehend beschrieben durchgeführt, insbesondere die Überprüfung der Hochtemperaturbeständigkeit wurde nach Durchführung des vorstehenden Temperatur-Zeit-Profils wie folgt vorgenommen.

Das Glas der Gegenbeispiele G3 bis G6 wurde von Raumtemperatur, RT, bis 1200⁰C mit einer Temperaturanstiegs- oder Aufheizrate von 10 K/min aufgeheizt.

Danach wurde bei 1200°C eine Haltezeit von 7 Minuten aufrecht erhalten und danach fand eine Abschrecken zurück zu Raumtemperatur, RT, statt, welches einer Abkühlung bei Raumtemperatur ohne zusätzliche Kühlungs- oder Erhitzungsmaßnahmen entsprach.

Dies führte zu den folgenden Ergebnissen.

Die Beispiele G3 und G4 kristallisierten vor Benetzung, weshalb kein An- oder Aufschmelzen stattfand und somit keine Einglasung möglich war.

Die Beispiele G5 und G6 benetzen zwar das Metall, erfüllen aber nicht die Vorgaben einer Temperaturbeständigkeit von bis höher als 1200 °C und führten zu den in Tabelle 4 wiedergegebenen Ergebnissen.

**Tabelle 4**

| **Beispiele** | **Hermetische Dichtung** | **Hochtemperaturbeständigkeit** |
|---|---|---|
| **G3** | X | O |
| **G4** | X | O |
| **G5** | O | X |
| **G6** | O | X |

| | | |
|---|---|---|
| O - Bestanden X - Nicht bestanden | | |

Darüber hinaus haben die Erfinder die vorstehend beschriebenen Temperatur-Zeit-Profile auf zwei weitere bevorzugte Ausführungsformen der zweiten bevorzugten Ausführungsform der zumindest teilweise kristallisierbaren Gläser angewandt und danach die Temperatur-, insbesondere Hochtemperatur-beständigkeitsprüfung durchgeführt.

Das erste weitere, zumindest teilweise kristallisierbare Glas war das Glas des dritten erfindungsgemäßen Ausführungsbeispiels G7 und wies die nachfolgende Zusammensetzung auf, angegeben in Gewichtsprozent der Oxide:

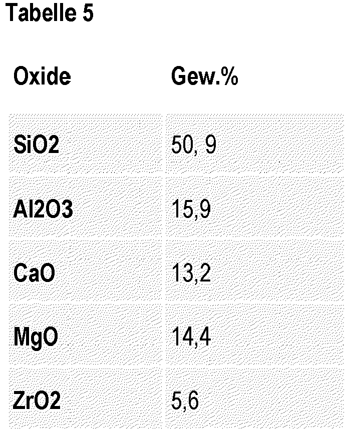

Dieses dritte erfindungsgemäße, zumindest teilweise kristallisierbare Glas G7 der zweiten bevorzugten Ausführungsform zeigte die nachfolgenden thermischen Eigenschaften:

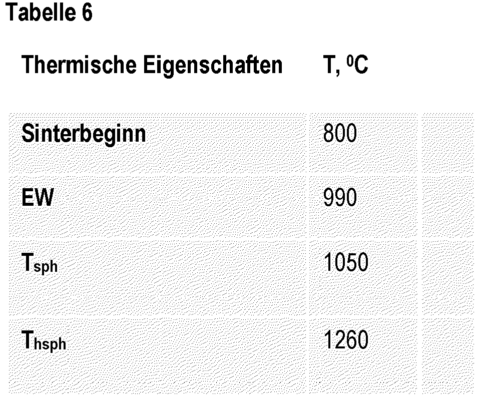

Wobei "Sinterbeginn" die Temperatur der beginnenden Sinterung und EW die Erweichungstemperatur bezeichnet.

Das zweite weitere, zumindest teilweise kristallisierbare Glas war das Glas des vierten erfindungsgemäßen Ausführungsbeispiels G8 der zweiten bevorzugten erfindungsgemäßen Ausführungsform und wies die nachfolgende Zusammensetzung auf, angegeben in Gewichtsprozent der Oxide:

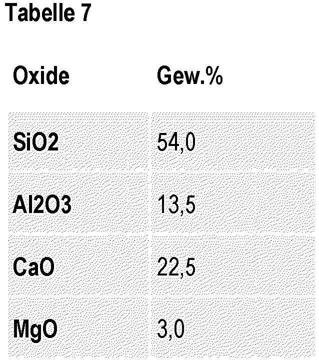

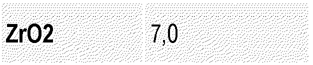

Das zweite weitere, zumindest teilweise kristallisierbare Glas G8 zeigte die nachfolgenden thermischen Eigenschaften:

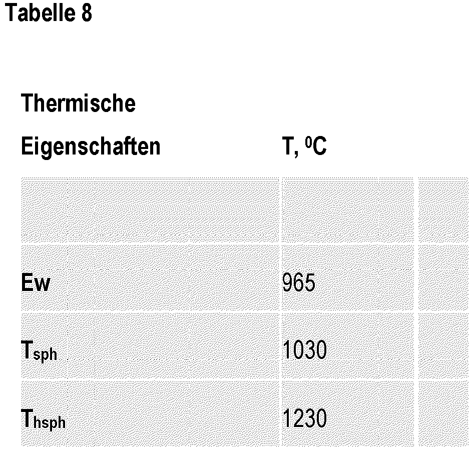

Nachfolgend wird für ein besseres Verständnis auf Figur 5 Bezug genommen, welche eine photographische Aufnahme, die mittels des dem Fachmann an sich bekannten erhitzungsmikroskopischen Verfahrens gewonnen wurde, zeigt. Soweit bei der nachfolgenden Beschreibung bevorzugter Ausführungsformen Bezugszeichen verwendet werden, unterscheiden sich die mit den jeweiligen Bezugszeichen versehenen Baugruppen, Bestandteile oder Merkmale im Wesentlichen nicht. Bis auf die jeweils verschiedene Zusammensetzung der jeweiligen zumindest teilweise kristallisierbaren oder kristallisierten Gläser sowie deren Eigenschaften, welche zu dem jeweiligen Glas gemacht werden, sind ansonsten Aussagen zu den jeweiligen Baugruppen für alle Ausführungsformen sowie deren Ausführungsbeispiele oder Versionen gleich.

Die in Figur 5 gezeigte Prüfungsanordnung umfasst einen Sinterkörper oder Sinterling 1 sowie eine Metall umfassende Einhausung 4.1, von welcher das Einhausungsmaterial 4 gut zu erkennen ist.

Das Einhausungsmaterial 4 umfasst ein Metall aus der Gruppe der Stähle, beispielsweise der Normalstähle, Edelstähle, nichtrostende Stähle und der hochtemperaturstabilen ferritische Stähle, welche auch bekannt sind unter dem Markennamen Thermax, beispielsweise Thermax 4016, Thermax4742, oder Thermax4762 oder Crofer22 APU oder CroFer22 H oder NiFe-basierte Materialien, beispielsweise NiFe45, NiFe47 oder vernickelte Pins, oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitische Stähle wie 1.4828 oder 1.4841 oder eine hochtemperaturstabile keramische Verbindung, beispielsweise eine Aluminiumoxid-basierte Keramik oder eine Zirkoniumoxid-basierte Keramik beispielsweise eine Keramik, welche Y-stabilisiertes Zirkoniumoxid umfasst.

In der Einhausung 4.1 ist ein, auch als Sinter-Vorform bezeichneter Sinterkörper 1 angeordnet und nach dessen Temperaturbehandlung, bei welcher der geschmolzene Sinterkörper 1, welcher das zumindest teilweise kristallisierbare Glas 2 der Ausführungsform G7 umfasst, und durch die Temperaturbehandlung an der Einhausung 4.1 angeglast ist, gezeigt.

Das Temperatur-Zeit-Profil war dabei bereits wie vorstehend für das zumindest teilweise kristallisierbare Glas G7 beschrieben durchgeführt worden.

Hierbei wurde der Sintervorgang bei 920°C während einem zeitlichen Intervall von 15 Minuten durchgeführt.

Die Aufnahme der Figur 3 wurde mit einem Rasterelektronenmikroskop erhalten, mit welchem die in Figur 3 dargestellte Anordnung aufgezeichnet wurde, nachdem diese in der Mitte durch Sägen mit einer Feinsäge und anschließendes Polieren getrennt wurde.

Die in Figur 4 dargestellte Ausführungsform bestand die bei 1200°C während eines Zeitraums von 15 Minuten durchgeführte Temperaturbeständigkeitsprüfung und zeigten auch beim beschleunigten Abkühlen, Abschrecken keine Rissbildung oder mechanische Schädigungen.

In der Einhausung 4.1 wurde auch ein Sinterkörper 1, welcher das zumindest teilweise kristallisierbare Glas 2 der Ausführungsform G8 umfasste, und durch die Temperaturbehandlung an der Einhausung 4.1 angeglast war, geprüft.

Hierbei wurde der Sintervorgang bei 920°C während einem zeitlichen Intervall von 15 Minuten durchgeführt.

In ähnlicher Weise wurde das zumindest teilweise kristallisierbare Glas 2 der Ausführungsform G8 behandelt.

Die Ausführungsformen G7 und G8 bestanden die bei 1200°C während eines Zeitraums von 15 Minuten durchgeführte Temperaturbeständigkeitsprüfung und zeigten auch beim beschleunigten Abkühlen, Abschrecken keine Rissbildung oder mechanische Schädigungen.

Soweit in den Figuren Risse zu erkennen sein sollten, gehen diese auf das Sägen und dabei frei werdende mechanische Spannungen der zuvor bestehenden Druckeinglasung zurück, sind jedoch zuvor nicht in dem zumindest teilweise kristallisierten Glas vorhanden.

Nachfolgend wird auf Figur 6 Bezug genommen, welche eine elektronenmikroskopische Aufnahme einer Querschnittsansicht eines Sinterkörpers oder Sinterlings 1 nach dessen Sinterung in etwa tausendfacher Vergrößerung zeigt, bei welcher die im Sinterkörper oder Sinterling 1 verbliebenen Poren 11 oder Fehlstellen 11 zu erkennen sind, von welchen jedoch nicht alle mit einem eigenen Bezugszeichen versehen sind.

Figur 7 ist eine elektronenmikroskopische Aufnahme einer Querschnittsansicht des zumindest teilweise kristallisierenden Glases 2 zu entnehmen, welches aus dem in Figur 6 dargestellten Sinterkörper oder Sinterling 1 durch thermische Behandlung und insbesondere zumindest teilweise Kristallisation hervorgegangen ist, in tausendfacher Vergrößerung, bei welcher die im Sinterkörper oder Sinterling 1 gleichzeitig mit der Kristallisation entstandene Poren 21 zu erkennen sind.

Aus derartigen Aufnahmen, welche vorzugsweise auch in mehreren Schnittebenen und für eine Vielzahl von Sinterkörpern oder Sinterlingen 1 angefertigt werden können, lässt sich ein Verhältnis der bereits im Sinterkörper, Sinterling oder Formkörper angelegten oder vorhandenen Poren 11 relativ zu den gleichzeitig mit der Kristallisation entstandenen Poren 21 bestimmen.

Hieraus ergibt sich, beispielsweise bei einem Sintergrad von etwa 99%, ein Verhältnis der bereits im Sinterkörper, Sinterling oder Formkörper 1 angelegten oder vorhandenen Poren 11 relativ zu den gleichzeitig mit der Kristallisation entstandenen Poren 21 von etwa mindestens 1,8 oder größer, wobei dieses Verhältnis durch die maximale Sintertemperatur und die Mahlung, insbesondere durch den Mahlgrad des gemahlenen Glases, insbesondere Grünglases, in einem weiten Bereich einstellbar ist und beispielsweise in einem Bereich von mindestens 1,5 bis etwa 5 liegen kann.

Insbesondere stellt ein hoher Sintergrad sicher, dass das vorstehend erwähnte Verhältnis reproduzierbar erhalten werden kann.

In Figur 8 ist eine elektronenmikroskopische Aufnahme eines Sinterkörpers oder Sinterlings 1 zu sehen, welcher aus der Sinterung eines zumindest teilweise kristallisierbaren Glases der ersten bevorzugten Ausführungsform erhalten wurde. Der Sinterling umfasst Poren 11, wobei diese Poren unterschiedliche Größen und Ausgestaltungen aufweisen. Es handelt sich hierbei um Poren, welche aus dem Herstellungsprozess des Sinterlings resultieren und üblicherweise in Sinterkörpern auftreten. Obwohl sich Figur 8 und die nachfolgenden Figuren 9 bis 12 auf das zumindest teilweise kristallisierende Glas der ersten bevorzugten Ausführungsform beziehen, gelten die in diesen Figuren offenbarten und hierzu beschriebenen Sachverhalte im Wesentlichen auch für die weiteren bevorzugten Ausführungsformen.

Beispielhaft dargestellt ist in Figur 9 in Form einer elektronenmikroskopischen Aufnahme ein zumindest teilweise kristallisiertes Glas, welche verfahrensgemäß zwischen zwei Einhausungsmaterialien 4 angeordnet ist. An die Grenzflächen 3 zwischen den Einhausungsmaterialien 4 und dem zumindest teilweise kristallisierten Glas 2 schließt sich der Bereich 22 an, welcher bereits im teilweise kristallisierten Glas 2 liegt, aber eine sehr geringe Porosität aufweist. Demgegenüber ist im weiter innen liegenden Bereich 24 eine deutlich höhere Porosität ausgebildet. Zwischen den Bereichen 22 und 24 kann beispielhaft eine Grenzlinie, welche eine im verfahrensgemäß verarbeiteten Sinterling oder Sinterkörper 23 vorhandene Grenzfläche andeutet, angenommen werden, welche die Bereiche mit unterschiedlicher Porosität voneinander abgrenzt.

In Figur 10 ist eine Detailansicht der elektronenmikroskopischen Aufnahme einer Ausführungsform mit dem in Figur 9 gezeigten Material zu sehen. Das zumindest teilweise kristallisierte Glas 2 weist in Bereich 24 Poren 21 auf, wobei der besseren Übersichtlichkeit halber nicht alle Poren bezeichnet sind. Weiterhin bezeichnet ist die Grenzlinie 23, welche eine im verfahrensgemäß verarbeiteten Sinterling oder Sinterkörper 23 vorhandene Grenzfläche andeutet, welche den Bereich 22 mit geringer Porosität von dem Bereich 24 mit hoher Porosität trennt, wobei diese Grenzlinie 23 hier lediglich beispielhaft zur Verdeutlichung der beiden unterschiedlichen Bereiche 22 und 24 eingezeichnet wurde. Der Bereich 22 des zumindest teilweise kristallisierten Glases 2 ist dabei an der Grenzfläche 3 zum Einhausungsmaterial 4 angeordnet. Es ist gegenüber den in Figur 8 dargestellten Poren sehr gut zu erkennen, dass die weitaus überwiegende Anzahl der in Figur 10 dargestellten Poren nicht bereits in dem Sinterkörper, aus welchem das zumindest teilweise kristallisierte Glas hervorgegangen ist, angelegt oder vorhanden sind.

Das zumindest teilweise kristallisierte Glas 2 umfasst Kristallite, welche hier unter anderem als helle, längliche Bestandteile in einer dunkelgrauen Matrix, welche zum Teil die sogenannte Restglasphase oder Glasphase umfasst, abgebildet sind.

Figur 11 zeigt eine elektronenmikroskopische Aufnahme eines zumindest teilweise kristallisierten Glases 2 in Kontakt mit einem Einhausungsmaterial 4, bei welchem die Haltetemperatur 940°C +/- 30°C betrug und diese Temperatur über eine Dauer von 30 Minuten anlag. Die Poren 21 sind hierbei schwarz hinterlegt worden, sodass mit einem entsprechenden Auswerteverfahren die Porosität bestimmt werden kann. Hierbei wurden die schwarzen Pixel des Bildes ausgewertet. Damit ergibt sich die Porosität *ϕ* für die in Figur 11 dargestellte Probe zu 20 %, welche graphisch im mittleren homogenen Bereich ermittelt wurde. Der Grenzbereich 22 mit geringer Porosität weist eine Ausdehnung von ca. 40 µm auf, wobei der Gradient der Porosität über eine Breite von ca. 140 µm ausgebildet ist. Ebenfalls bezeichnet sind die Grenzfläche 3 zwischen dem Einhausungsmaterial 4 und dem zumindest teilweise kristallisierten Glas 2 sowie der Bereich 24 mit erhöhter Porosität. Ebenfalls ist die Grenzlinie 23 eingezeichnet, von der ausgehend in Richtung der Grenzfläche 3 sich der Bereich 23 mit geringer Porosität erstreckt.

Auch in Figur 12 ist eine elektronenmikroskopische Darstellung eines zumindest teilweise kristallisierten Glases 2, welches dieselbe Ausgangszusammensetzung wie das zumindest teilweise kristallisierte Glas in Figur 11 aufweist, in Kontakt mit einem Einhausungsmaterial 4 zu sehen. Auch hierbei wurden zur graphischen Auswertung die Poren 21 geschwärzt. Die Haltetemperatur war etwa 50°C höher bei der gleichen Haltezeit.

Die Porosität *ϕ* beträgt in diesem Beispiel nach graphischer Auswertung ca. 38 % und hat sich damit im Vergleich zur in Figur 11 abgebildeten Probe fast verdoppelt. Auch die mittlere Porengröße hat sich erkennbar deutlich erhöht. Der Bereich 22 mit geringer Porosität ist ebenfalls stärker ausgeprägt und weist nun eine räumliche Ausdehnung von ca. 60 µm auf. Allerdings ist der Gradient, innerhalb dessen die Porosität von einem geringen Wert auf den Maximalwert ansteigt, also der Übergang in den Bereich 24 mit hoher Porosität des zumindest teilweise kristallisierten Glases 2, geringer ausgeprägt und weist nun eine Breite von ca. 100 µm auf, hat also gegenüber der in Figur 11 abgebildeten Probe abgenommen. Auch hier ist die Grenzlinie 23 eingezeichnet, von der ausgehend in Richtung der Grenzfläche 3 sich der Bereich 23 mit geringer Porosität erstreckt. Ebenfalls bezeichnet ist die Grenzfläche 3.

### Bezugszeichenliste

- 1: Sinterling bzw. Sinterkörper
- 2: zumindest teilweise kristallisiertes Glas
- 3: Grenzfläche
- 4: Einhausungsmaterial
- 4.1: Einhausung
- 5: Funktionselement
- 6: Kristallphase
- 7: Kristallit
- 8: Kristallit
- 9: Kristall oder Kristallit
- 10: Durchführungs- oder Verbindungselement
- 11: Poren des Sinterlings oder Sinterkörpers
- 12: Verbindung
- 13: Symmetrie- oder Längsachse des Durchführungs- oder Verbindungselements
- 21: Poren im zumindest teilweise kristallisierten Glas
- 22: Bereich mit sehr geringer Porosität
- 23: Grenzlinie zwischen Bereich mit geringer und mit hoher Porosität
- 24: Bereich mit erhöhter Porosität

## Patentansprüche

1. Verbindung eines zumindest teilweise kristallisierten Glases mit zumindest einem Fügepartner mit einer Grenzfläche zwischen dem zumindest teilweise kristallisierten Glas und dem zumindest einen Fügepartner, wobei das zumindest teilweise kristallisierbare Glas eine Porosität aufweist, die zur Grenzfläche des zumindest teilweise kristallisierten Glases mit dem Fügepartner hin abnimmt und
das zumindest teilweise kristallisierte Glas zumindest eine Kristallphase sowie Poren umfasst, welche in dem zumindest teilweise kristallisierten Glas strukturiert verteilt angeordnet sind
wobei die Porosität einen Gradienten aufweist und die Porosität in einem Abstand von weniger als 10 µm zur Grenzfläche des zumindest teilweise kristallisierten Glases weniger als 10 % beträgt.

2. Verbindung nach Anspruch 1, bei welcher die Porosität einen Gradienten aufweist und die Porosität in einem Abstand von weniger als 20 µm zur Grenzfläche des zumindest teilweise kristallisierten Glases weniger als 10 % beträgt, vorzugsweise weniger als 5 % und am bevorzugtesten weniger als 3 % beträgt, wobei die Porosität zur Grenzfläche des zumindest teilweise kristallisierten Glases mit dem Fügepartner hin abnimmt.

3. Verbindung nach Anspruch 1 oder 2, bei welcher an der Grenzfläche zwischen dem zumindest teilweise kristallisierten Glas und dem Fügepartner eine geringere Anzahl von Poren vorliegt als im Inneren des zumindest teilweise kristallisierten Glases oder keine Poren vorliegen, wobei die Porosität unterhalb eines Abstands des zumindest teilweise kristallisierten Glases von der Grenzfläche zum Fügepartner von 1 µm, bevorzugt 2 µm auf einen Wert von weniger als 5 % absinkt.

4. Verbindung nach einem der Ansprüche von 1 bis 3, bei welcher die Porosität einen Gradienten aufweist und die Porosität von der Grenzfläche und/oder der Oberfläche des zumindest teilweise kristallisierten Glases zu dessen Innerem hin zunimmt und insbesondere auf einen Maximalwert ansteigt, welcher 20 % oder mehr beträgt.

5. Verbindung nach einem der Ansprüche von 1 bis 4 umfassend ein zumindest teilweise kristallisiertes Glas,
bei welchem die Größe der Poren zwischen 2 µm und 30 µm, bevorzugt zwischen 5 µm und 25 µm liegt und/oder
bei welchem die Kristallite eine Größe zwischen 0,1 µm bis 50 µm aufweisen und/oder bei welchem die Poren zumindest teilweise in der Nähe von Kristallen angeordnet sind und/oder
bei welchem der Kristallgehalt mindestens 25 %, bezogen auf das gesamte Volumen des zumindest teilweise kristallisierten Glases, beträgt, bevorzugt mindestens 50 % beträgt und besonders bevorzugt mindestens 60 % beträgt und/oder
bei welchem die Porosität mindestens 3 % bezogen auf das Volumen beträgt, bevorzugt mindestens 5 %, besonders bevorzugt mindestens 10 % beträgt.

6. Verbindung nach einem der vorstehenden Ansprüche,
bei welcher die Verbindung fluiddicht, bevorzugt hermetisch dicht ausgebildet ist
und/oder
umfassend als Material des Fügepartners insbesondere ein Metall aus der Gruppe der Stähle, beispielsweise der Normalstähle, Edelstähle, nichtrostende Stähle und der hochtemperaturstabilen ferritische Stähle, NiFe-basierte Materialien, beispielsweise NiFe45, NiFe47 oder vernickelte Pins, oder austenitische Stähle wie 1.4828 oder 1.4841 oder eine hochtemperaturstabile keramische Verbindung, beispielsweise eine Aluminiumoxid-basierte Keramik oder eine Zirkoniumoxid-basierte Keramik beispielsweise eine Keramik, welche Y-stabilisiertes Zirkoniumoxid umfasst.

7. Durchführungs- oder Verbindungselement umfassend eine Verbindung nach einem der vorstehenden Ansprüche.

8. Durchführungs- oder Verbindungselement nach Anspruch 7,
umfassend einen Fügepartner mit wenigstens einem Material, insbesondere wenigstens einem weiteren Material, insbesondere dem Material einer Einhausung, wobei der Unterschied in den thermischen Ausdehnungskoeffizienten zwischen dem zumindest teilweise kristallisierten Glas und dem Material des Fügepartners, insbesondere dem Material einer Einhausung weniger als 3*10⁻⁶/K beträgt und/oder
bei welchem das Material des Fügepartners, insbesondere das Material einer Einhausung, als temperaturstabiles Material ausgebildet ist, bevorzugt als temperaturstabiles Metall, insbesondere als temperaturstabile Keramik.

9. Zumindest teilweise kristallisiertes Glas für eine Verbindung eines zumindest teilweise kristallisierten Glases mit zumindest einem Fügepartner mit einer Grenzfläche zwischen dem zumindest teilweise kristallisierten Glas und dem zumindest einen Fügepartner nach Anspruch 1 bis 6 sowie für ein Durchführungs- oder Verbindungselement nach Anspruch 7 oder 8, umfassend a) folgende Oxide, Angaben in Gew.-%:
| | |
|---|---|
| SiO₂: | 20 bis 60, bevorzugt 25 bis 50 |
| Al₂O₃: | 0,5 bis 20, bevorzugt 0,5 bis 10 |
| CaO: | 10 bis 50 |
| MgO: | 0,5 bis 50, bevorzugt 0,5 bis 10 |
| Y₂O₃: | 0,1 bis 20, bevorzugt 3 bis 20 |
| ZrO₂: | 0,1 bis 25, bevorzugt 3 bis 20 |
| B₂O₃: | 1 bis 15, bevorzugt 3 bis 12, |
wobei weiterhin HfO₂ optional bis zu 0,25 Gew.-% enthalten sein kann.
oder
umfassend b) folgende Oxide, Angaben in Gew.-%:
| | | |
|---|---|---|
| SiO₂: | 36 bis 54, | bevorzugt 40 bis 54 |
| Al₂O₃: | 8 bis 16, | bevorzugt 8 bis 13 |
| CaO: | 0 bis 35, | bevorzugt 5 bis 25 |
| MgO: | 0 bis 17, | bevorzugt 3 bis 14 |
| RO: | 8 bis 39, | bevorzugt 8 bis 35 |
| ZrO₂: | 0 bis 25, | bevorzugt 0 bis 17 |
| B₂O₃: | 0 bis 3, | bevorzugt 0 bis 2, besonders bevorzugt 0 |
wobei der Anteil RO die Oxide BaO, SrO, MgO, ZnO jeweils einzeln oder in Summe oder in beliebigen Mischungen bezeichnet und
bevorzugt RO einzeln oder in jeder beliebigen Kombination in Gew.%:
| | |
|---|---|
| BaO | 0-36 |
| MgO | 0-22 |
| CaO | 0 |
beträgt.

10. Zumindest teilweise kristallisiertes Glas nach Anspruch 9 , wobei die zumindest eine Kristallphase ein Metalloxid mit einem mittelgroßen Kation, welches einen Ionenradius zwischen 0,50 Å und 0,90 Å aufweist, und/oder vorzugsweise ein Kettensilikat umfasst.

11. Zumindest teilweise kristallisiertes Glas nach Anspruch 9 oder 10, wobei bei Variante a) das Metalloxid ZrO₂ und bevorzugt zusätzlich Yttrium umfasst.

12. Zumindest teilweise kristallisiertes Glas nach Anspruch 9 oder 10, wobei bei Variante b) die Kristallphase Y₂O₃-frei und/oder ZrO₂-frei ist.

13. Zumindest teilweise kristallisiertes Glas nach Anspruch 10 bis 12, wobei das mindestens eine Kettensilikat als silikatische Baueinheit SiO₃²⁻ umfasst und bevorzugt als Erdalkalioxid-umfassendes Kettensilikat ausgebildet ist.

14. Zumindest teilweise kristallisiertes Glas nach Anspruch 10, wobei das Erdalkalioxid CaO ist und das Kettensilikat bevorzugt weiterhin Yttrium umfasst.

15. Zumindest teilweise kristallisiertes Glas nach Anspruch 10 bis 14, wobei das Kettensilikat als Erdalkalioxid umfassendes Kettensilikat mit Pyroxen-Struktur ausgebildet ist und wobei das Erdalkalioxid bevorzugt CaO und MgO umfasst.

16. Verfahren zur Herstellung einer Verbindung zwischen einem zumindest teilweise kristallisierten Glas und einem Fügepartner nach einem der Ansprüche 1 bis 6, insbesondere einem Einhausungsmaterial oder einem Dichtelement, insbesondere einem Einhausungsmaterial eines Durchführungs- und Verbindungselements nach einem der Ansprüche von 7 bis 8 umfassend die folgenden Schritte:
1. Bringen eines gesinterten Grünglaskörpers oder Sinterkörpers zwischen die oder an das zu verbindende Material zumindest eines Fügepartners, insbesondere des Materials einer Einhausung oder eines Dichtungs- und Durchführungselements,
2. Erhitzen der Materialien, insbesondere des Materials des gesinterten Grünglaskörpers oder Sinterkörpers und des zu verbindenden Materials, insbesondere des Materials eines Fügepartners, insbesondere des Materials der Einhausung oder des Dichtungs- und Durchführungselements, auf eine Temperatur T₁, sodass es zu einem Auffließen des gesinterten Grünglaskörpers kommt mit der Folge, dass die zu verbindenden Materialien, insbesondere das Material des Fügepartners und insbesondere das Material der Einhausung oder des Dichtungs- und Durchführungselements, von dem Grünglas benetzt werden, und eine formschlüssige Verbindung des Materials des Grünglaskörpers und des Materials des Fügepartners, insbesondere des Materials der Einhausung oder des Dichtungs- und Durchführungselements, vorliegt,
3. Erhitzen der formschlüssig verbundenen Materialien auf eine Temperatur T₂, welche größer ist als T₁, sodass es zu einer zumindest partiellen Kristallisation des Grünglases kommt, sodass ein zumindest teilweise kristallisiertes Glas vorliegt, welches Poren umfasst, wobei die Poren eine strukturierte Verteilung aufweisen.

17. Verfahren nach Anspruch 16, bei welchem die Verfahrensschritte des
Bringens einer Sinter-Vorform oder eines Sinterkörpers in oder an ein Dichtungselement oder eine Einhausung, insbesondere eine Einhausung eines Durchführungs- oder Dichtungselements
des Einglasens unter Erreichung einer Temperatur von Tₘₐₓ von über 900 °C, wobei die Haltetemperatur
- bei einer Zusammensetzung des zumindest teilweise kristallisierbaren Glases oder Grünglaskörpers oder Sinterkörpers mit einer Zusammensetzung des zumindest teilweise kristallisierten Glases gemäß Anspruch 9, Variante a) zwischen 900°C und 1050°C beträgt und
- bei einer Zusammensetzung des zumindest teilweise kristallisierbaren Glases oder Grünglaskörpers oder Sinterkörpers mit einer Zusammensetzung des teilweise kristallisierten Glases gemäß Anspruch 9, Variante b) mindestens 950 °C und höchstens 1200 °C beträgt und bevorzugt die Haltetemperatur mindestens 1000 °C und höchstens 1150 °C beträgt und wobei
die Haltezeit zwischen 20 Minuten und 70 Minuten beträgt, wobei hierbei insbesondere das Temperatur-Zeit-Profil so gewählt ist, dass strukturiert verteilte Poren entstehen und somit eine gesteuerte Porosität entsteht,
durchgeführt werden.

18. Verwendung einer Verbindung nach einem der Ansprüche 1 bis 6 in der Abgasanlage eines Kraftfahrzeugs.

19. Verwendung eines Durchführungs- oder Verbindungselements nach einem der Ansprüche von 7 bis 8 in der Abgasanlage eines Kraftfahrzeugs.

## Claims

1. A bond of an at least partially crystallized glass with at least one joining partner, with an interface between the at least partially crystallized glass and the at least one joining partner, wherein the at least partially crystallizable glass has a porosity that decreases towards the interface between the at least partially crystallized glass and the joining partner; and
wherein the at least partially crystallized glass comprises at least one crystal phase as well as pores which are distributed in the at least partially crystallized glass in a structured manner;
wherein the porosity exhibits a gradient, and wherein at a distance of less than 10 µm from the interface of the at least partially crystallized glass, said porosity is less than 10 %.

2. The bond according to claim 1, wherein the porosity exhibits a gradient, and wherein at a distance of less than 20 µm from the interface of the at least partially crystallized glass, said porosity is less than 10 %, preferably less than 5 %, and most preferably less than 3 %, wherein the porosity decreases towards the interface between the at least partially crystallized glass and the joining partner.

3. The bond according to claim 1 or 2, wherein at the interface between the at least partially crystallized glass and the joining partner, the number of pores is smaller then in the interior of the at least partially crystallized glass or there are no pores at all, wherein at a distance of the at least partially crystallized glass from the interface with the joining partner of less than 1 µm, preferably less than 2 µm, the porosity drops to a value of less than 5 %.

4. The bond according to any one of claims 1 to 3, wherein the porosity exhibits a gradient, and wherein the porosity increases from the interface and/or the surface of the at least partially crystallized glass towards the interior thereof, and in particular increases to a maximum value of 20 % or more.

5. The bond according to any one of claims 1 to 4, comprising an at least partially crystallized glass
in which the pores have a size between 2 µm and 30 µm, preferably between 5 µm and 25 µm; and/or
in which the crystallites have a size between 0.1 µm to 50 µm; and/or
in which the pores are at least partially located in the vicinity of crystals; and/or
in which the crystal content is at least 25 % based on the total volume of the at least partially crystallized glass, preferably at least 50 %, and most preferably at least 60 %; and/or
which has a porosity of at least 3 % by volume, preferably at least 5 %, most preferably at least 10 %.

6. The bond according to any one of the preceding claims,
wherein the bond is fluid-tight, preferably hermetically tight; and/or
comprising, as a material of the joining partner, in particular a metal from the group of steels such as standard steels, stainless steels, rustproof steels, and high-temperature stable ferritic steels, NiFe-based materials such as NiFe45, NiFe47, or nickel plated pins, or austenitic steels such as 1.4828 or 1.4841, or a high-temperature stable ceramic compound such as an alumina-based ceramic or a zirconia-based ceramic, for example a ceramic comprising Y-stabilized zirconia.

7. A feed-through element or connecting element, comprising a bond according to any one of the preceding claims.

8. The feed-through element or connecting element, according to claim 7, comprising a joining partner with at least one material, in particular at least one further material, in particular the material of an enclosure, wherein the difference in thermal expansion coefficients between the at least partially crystallized glass and the material of the joining partner, in particular the material of an enclosure, is less than 3 * 10⁻⁶ /K; and/or
wherein the material of the joining partner, in particular the material of an enclosure, is in the form of a temperature-stable material, preferably a temperature-stable metal, in particular a temperature-stable ceramic.

9. An at least partially crystallized glass for a bond between an at least partially crystallized glass and at least one joining partner with an interface between the at least partially crystallized glass and the at least one joining partner according to any one of claims 1 to 6, and for a feed-through element or connecting element according to any one of claims 7 or 8,
comprising a) the following oxides, given in wt%:
| | | |
|---|---|---|
| SiO₂: | 20 to 60, | preferably 25 to 50 |
| Al₂O₃: | 0.5 to 20, | preferably 0.5 to 10 |
| CaO: | 10 to 50 | |
| MgO: | 0.5 to 50, | preferably 0.5 to 10 |
| Y₂O₃: | 0,1 to 20, | preferably 3 to 20 |
| ZrO₂: | 0,1 to 25, | preferably 3 to 20 |
| B₂O₃: | 1 to 15, | preferably 3 to 12, |
wherein, furthermore, up to 0.25 wt% of HfO₂ may optionally be included;
or
comprising b) the following oxides, given in wt%:
| | | |
|---|---|---|
| SiO₂: | 36 to 54, | preferably 40 to 54 |
| Al₂O₃: | 8 to 16, | preferably 8 to 13 |
| CaO: | 0 to 35, | preferably 5 to 25 |
| MgO: | 0 to 17, | preferably 3 to 14 |
| RO: | 8 to 39, | preferably 8 to 35 |
| ZrO₂: | 0 to 25, | preferably 0 to 17 |
| B₂O₃: | 0 to 3, | preferably 0 to 2, most preferably 0, |
wherein the amount of RO indicates the oxides BaO, SrO, MgO, ZnO individually or in total or in any mixture thereof, and
preferably, RO includes, individually or in any combination thereof, in wt%:
| | |
|---|---|
| BaO | 0-36 |
| MgO | 0-22 |
| CaO | 0 . |

10. The at least partially crystallized glass according to claim 9, wherein the at least one crystal phase comprises a metal oxide including a medium-sized cation that has an ionic radius between 0.50 Å and 0.90 Å and/or preferably a chain silicate.

11. The at least partially crystallized glass according to claim 9 or 10, wherein with variant a) the metal oxide comprises ZrO₂ and preferably additionally yttrium.

12. The at least partially crystallized glass according to claim 9 or 10, wherein with variant b) the crystal phase is free of Y₂O₃ and/or free of ZrO₂.

13. The at least partially crystallized glass according to claim 10 to 12, wherein the at least one chain silicate comprises SiO₃²⁻ as a silicate structural unit and preferably is in the form of a chain silicate comprising alkaline earth oxide.

14. The at least partially crystallized glass according to claim 10, wherein the alkaline earth oxide is CaO, and wherein the chain silicate preferably further comprises yttrium.

15. The at least partially crystallized glass according to claim 10 to 14, wherein the chain silicate is in the form of a chain silicate comprising alkaline earth oxide and having a pyroxene structure, and wherein the alkaline earth oxide preferably comprises CaO and MgO.

16. A method for producing a bond between an at least partially crystallized glass and a joining partner according to any one of claims 1 to 6, in particular an enclosure material or a sealing element, in particular an enclosure material of a feed-through element and connecting element according to any one of claims 7 to 8, comprising the steps of:
1. bringing a sintered green glass body or sintered body between or onto the material to be joined of at least one joining partner, in particular the material of an enclosure or of a sealing element and feed-through element;
2. heating the materials, in particular the material of the sintered green glass body or sintered body and of the material to be joined, in particular the material of a joining partner, in particular the material of the enclosure or of the sealing element and feed-through element, to a temperature T₁, so that the sintered green glass body is caused to flow, so that the materials to be joined, in particular the material of the joining partner and in particular the material of the enclosure or of the sealing element and feed-through element are wetted by the green glass and a form-fitting connection is provided between the material of the green glass body and the material of the joining partner, in particular the material of the enclosure or of the sealing element and feed-through element;
3. heating the materials connected in a form-fitting manner to a temperature T₂ which is greater than T₁, so that the green glass is caused to at least partially crystallize such that an at least partially crystallized glass is provided which comprises pores, wherein the pores exhibit a structured distribution.

17. The method according to claim 16, wherein the following method steps are performed:
bringing a sintered preform or a sintered body into or onto a sealing element or an enclosure, in particular an enclosure of a feed-through element or sealing element;
glass-sealing while reaching a temperature Tₘₐₓ of more than 900 °C, wherein a holding temperature
- is between 900 °C and 1050 °C, if a composition of the at least partially crystallizable glass or green glass body or sintered body corresponds to a composition of the at least partially crystallized glass according to variant a) of claim 9, and
- is at least 950 °C and at most 1200 °C, and preferably the holding temperature is at least 1000 °C and at most 1150 °C, if a composition of the at least partially crystallizable glass or green glass body or sintered body corresponds to a composition of the partially crystallized glass according to variant b) of claim 9, and wherein
the holding time is between 20 minutes and 70 minutes, wherein in particular the temperature-time profile is selected such that pores are formed which are distributed in a structured manner so that controlled porosity is created.

18. Use of a bond according to any one of claims 1 to 6 in an exhaust system of a motor vehicle.

19. Use of a feed-through element or connecting element according to any one of claims 7 to 8 in an exhaust system of a motor vehicle.

## Revendications

1. Liaison d'un verre au moins partiellement cristallisé avec au moins un élément à assembler, avec une interface entre le verre au moins partiellement cristallisé et l'élément à assembler, au nombre d'au moins un, le verre au moins partiellement cristallisé présentant une porosité qui diminue en direction de l'interface entre le verre au moins partiellement cristallisé et l'élément à assembler, et
le verre au moins partiellement cristallisé comportant au moins une phase cristalline ainsi que des pores qui sont disposés avec une répartition structurée dans le verre au moins partiellement cristallisé,
la porosité présentant un gradient, et la porosité étant inférieure à 10 % à une distance de moins de 10 µm par rapport à l'interface du verre au moins partiellement cristallisé.

2. Liaison selon la revendication 1, dans laquelle la porosité présente un gradient, et la porosité est inférieure à 10 % à une distance de moins de 20 µm par rapport à l'interface du verre au moins partiellement cristallisé, de préférence inférieure à 5 % et de manière particulièrement avantageuse inférieure à 3 %, sachant que la porosité diminue en direction de l'interface du verre au moins partiellement cristallisé avec l'élément à assembler.

3. Liaison selon la revendication 1 ou 2, dans laquelle, au niveau de l'interface entre le verre au moins partiellement cristallisé et l'élément à assembler, le nombre de pores est inférieur à celui présent à l'intérieur du verre au moins partiellement cristallisé, ou bien il n'y a pas de pores, sachant qu'en dessous d'une distance de 1 µm, de préférence de 2 µm, du verre au moins partiellement cristallisé par rapport à l'interface avec l'élément à assembler, la porosité diminue jusqu'à une valeur inférieure à 5 %.

4. Liaison selon une des revendications 1 à 3, dans laquelle la porosité présente un gradient, et la porosité augmente depuis l'interface et/ou la surface du verre au moins partiellement cristallisé, en direction de l'intérieur de celui-ci, et augmente en particulier jusqu'à une valeur maximale qui est de 20 % ou plus.

5. Liaison selon une des revendications 1 à 4, comportant un verre au moins partiellement cristallisé,
dans lequel la taille des pores est comprise entre 2 µm et 30 µm, de préférence entre 5 µm et 25 µm, et/ou
dans lequel les cristallites ont une taille comprise allant de 0,1 µm à 50 µm, et/ou dans lequel les pores sont disposés au moins en partie à proximité de cristaux, et/ou
dans lequel la teneur cristalline est d'au moins 25 % par rapport au volume total du verre au moins partiellement cristallisé, de préférence d'au moins 50 %, et de manière particulièrement avantageuse d'au moins 60 %, et/ou
dans lequel la porosité est d'au moins 3 % par rapport au volume, de préférence d'au moins 5 % et de manière particulièrement avantageuse d'au moins 10 %.

6. Liaison selon une des revendications précédentes,
dans laquelle la liaison peut être réalisée de manière étanche aux fluides, de préférence de manière hermétiquement étanche,
et/ou
comportant, en tant que matériau de l'élément à assembler, en particulier un métal du groupe des aciers, par exemple des aciers ordinaires, des aciers inoxydables, des aciers non corrosifs et des aciers ferritiques stables à haute température, des matériaux à base de NiFe, par exemple NiFe45, NiFe47 ou des broches nickelées, ou des aciers austénitiques tels que 1.4828 ou 1.4841 ou une liaison céramique stable à haute température, par exemple une céramique à base d'oxyde d'aluminium ou une céramique à base d'oxyde de zirconium, par exemple une céramique qui comporte de l'oxyde de zirconium stabilisé à l'Y.

7. Elément de passage ou de liaison, comprenant une liaison selon une des revendications précédentes.

8. Elément de passage ou de liaison selon la revendication 7,
comportant un élément à assembler avec au moins un matériau, en particulier au moins un matériau supplémentaire, notamment le matériau d'une enceinte, la différence des coefficients de dilatation thermique entre le verre au moins partiellement cristallisé et le matériau de l'élément à assembler, notamment le matériau d'une enceinte, étant inférieure à 3*10⁻⁶/K, et/ou
dans lequel le matériau de l'élément à assembler, notamment le matériau d'une enceinte, est réalisé comme matériau stable en température, de préférence comme métal stable en température, en particulier comme céramique stable en température.

9. Verre au moins partiellement cristallisé, destiné à une liaison d'un verre au moins partiellement cristallisé avec au moins un élément à assembler, avec une interface entre le verre au moins partiellement cristallisé et l'élément à assembler, au nombre d'au moins un, selon les revendications 1 à 6, ainsi que pour un élément de passage ou de liaison selon la revendication 7 ou 8, comportant a) les oxydes suivants, indiqués en % en poids :
| | |
|---|---|
| SiO₂ : | 20 à 60, de préférence 25 à 50 |
| AL₂O₃ : | 0,5 à 20, de préférence 0,5 à 10 |
| CaO : | 10 à 50 |
| MgO : | 0,5 à 50, de préférence 0,5 à 10 |
| Y₂O₃ : | 0,1 à 20, de préférence 3 à 20 |
| ZrO₂ : | 0,1 à 25, de préférence 3 à 20 |
| B₂O₃ : | 1 à 15, de préférence 3 à 12, |
et pouvant en outre contenir de manière facultative HfO₂, jusqu'à 0,25 % en poids,
ou
comportant b) les oxydes suivants, indiqués en % en poids :
| | | |
|---|---|---|
| SiO₂ : | 36 à 54, | de préférence 40 à 54 |
| AL₂O₃ : | 8 à 16, | de préférence 8 à 13 |
| CaO : | 0 à 35, | de préférence 5 à 25 |
| MgO : | 0 à 17, | de préférence 3 à 14 |
| RO : | 8 à 39, | de préférence 8 à 35 |
| ZrO₂ : | 0 à 25, | de préférence 0 à 17 |
| B₂O₃ : | 0 à 3, | de préférence 0 à 2, de manière particulière- |
ment avantageuse 0,
la proportion RO désignant les oxydes BaO, SrO, MgO, ZnO, chaque fois individuellement ou en somme ou dans des mélanges quelconques, et
RO, pris individuellement ou dans n'importe quelle combinaison, correspondant de préférence, en % en poids à :
| | |
|---|---|
| BaO | 0 à 36 |
| MgO | 0 à 22 |
| CaO | 0. |

10. Verre au moins partiellement cristallisé selon la revendication 9, dans lequel la phase cristalline, au nombre d'au moins une, comporte un oxyde métallique avec un cation de taille moyenne qui présente un rayon ionique compris entre 0,50 Å et 0,90 Å, et/ou de préférence un silicate en chaîne.

11. Verre au moins partiellement cristallisé selon la revendication 9 ou 10, sachant que dans la variante a), l'oxyde métallique comporte du ZrO₂ et de préférence en outre de l'yttrium.

12. Verre au moins partiellement cristallisé selon la revendication 9 ou 10, dans lequel, dans la variante b), la phase cristalline est exempte de Y₂O₃ et/ou exempte de ZrO₂.

13. Verre au moins partiellement cristallisé selon les revendications 10 à 12, dans lequel le silicate en chaîne, au nombre d'au moins un, comporte du SiO₃²⁻en tant que composant silicaté et est de préférence réalisé comme silicate en chaîne comportant de l'oxyde d'alcalino-terreux.

14. Verre au moins partiellement cristallisé selon la revendication 10, dans lequel l'oxyde d'alcalino-terreux est du CaO, et le silicate en chaîne comporte de préférence en outre de l'yttrium.

15. Verre au moins partiellement cristallisé selon les revendications 10 à 14, dans lequel le silicate en chaîne est réalisé comme silicate en chaîne à structure pyroxène, comportant de l'oxyde d'alcalino-terreux, et dans lequel l'oxyde d'alcalino-terreux comporte de préférence du CaO et du MgO.

16. Procédé de réalisation d'une liaison entre un verre au moins partiellement cristallisé et un élément à assembler selon une des revendications 1 à 6, notamment un matériau d'enceinte ou un élément d'étanchéité, en particulier un matériau d'enceinte d'un élément de passage et de liaison selon une des revendications 7 à 8, comprenant les étapes suivantes :
1. mise en place d'un corps fritté en verre cru ou d'un corps fritté entre les éléments à assembler ou sur le matériau à relier d'au moins un élément à assembler, notamment du matériau d'une enceinte ou d'un élément d'étanchéité et de passage,
2. chauffage des matériaux, notamment du matériau du corps fritté en verre cru ou du corps fritté et du matériau à relier, notamment du matériau d'un élément à assembler, en particulier du matériau de l'enceinte ou de l'élément d'étanchéité et de passage, à une température T₁, de sorte qu'il y a fluage du corps fritté en verre cru, ce qui a pour conséquence que les matériaux à relier, notamment le matériau de l'élément à assembler et notamment le matériau de l'enceinte ou de l'élément d'étanchéité et de passage, sont mouillés par le verre cru, et qu'une liaison par complémentarité de formes existe entre le matériau du corps en verre cru et le matériau de l'élément à assembler, notamment du matériau de l'enceinte ou de l'élément d'étanchéité et de passage,
3. chauffage des matériaux reliés par complémentarité de formes, jusqu'à une température T₂ qui est supérieure à T₁, de manière à ce qu'il y ait une cristallisation au moins partielle du verre cru, afin d'obtenir un verre au moins partiellement cristallisé qui comporte des pores, les pores présentant une répartition structurée.

17. Procédé selon la revendication 16, selon lequel sont exécutées les étapes de procédé de
mise en place d'une préforme frittée ou d'un corps fritté dans ou sur un élément d'étanchéité ou une enceinte, notamment une enceinte d'un élément de passage ou d'étanchéité,
scellement au verre en atteignant une température de Tₘₐₓ de plus de 900 °C, où la température de maintien
- pour une composition du verre au moins partiellement cristallisé ou du corps en verre cru ou du corps fritté avec une composition du verre au moins partiellement cristallisé selon la revendication 9, variante a), est comprise entre 900 °C et 1 050 °C, et
- pour une composition du verre au moins partiellement cristallisé ou du corps en verre cru ou du corps fritté avec une composition du verre au moins partiellement cristallisé selon la revendication 9, variante b), est au moins de 950 °C et au maximum de 1 200 °C, et de préférence, la température de maintien est au moins de 1 000 °C et au maximum de 1 150 °C, et selon lequel
le temps de maintien est compris entre 20 minutes et 70 minutes, sachant qu'ici le profil température-temps est choisi de manière à créer des pores à répartition structurée et ainsi une porosité contrôlée.

18. Utilisation d'une liaison selon une des revendications 1 à 6, dans l'installation de gaz d'échappement d'un véhicule à moteur.

19. Utilisation d'un élément de passage ou de liaison selon une des revendications 7 à 8, dans l'installation de gaz d'échappement d'un véhicule à moteur.
